(19) Europäisches Patentamt / European Patent Office / Office européen des brevets

(11) **EP 3 962 090 A1**

(12) **EUROPEAN PATENT APPLICATION**

(43) Date of publication:
**02.03.2022 Bulletin 2022/09**

(21) Application number: **21192500.3**

(22) Date of filing: **23.08.2021**

(51) International Patent Classification (IPC):
**H04N 21/218** (2011.01)    **H04N 21/4728** (2011.01)
**H04N 21/6587** (2011.01)    **H04N 21/81** (2011.01)

(52) Cooperative Patent Classification (CPC):
**H04N 21/21805; H04N 21/4728; H04N 21/6587; H04N 21/816**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020  JP 2020145154**

(71) Applicant: **Ricoh Company, Ltd.**
**Tokyo 143-8555 (JP)**

(72) Inventors:
• **AIKAWA, Tomonori**
**Tokyo (JP)**

• **MORITA, Kenichiro**
**Tokyo (JP)**
• **ANNAKA, Hidekuni**
**Tokyo (JP)**
• **AKIMOTO, Yuya**
**Tokyo (JP)**
• **KANDA, Hiroyuki**
**Tokyo (JP)**
• **KAMINUSHI, Kyohsuke**
**Tokyo (JP)**

(74) Representative: **SSM Sandmair**
**Patentanwälte Rechtsanwalt**
**Partnerschaft mbB**
**Joseph-Wild-Straße 20**
**81829 München (DE)**

(54) **COMMUNICATION TERMINAL, IMAGE COMMUNICATION SYSTEM, METHOD FOR DISPLAYING IMAGE, AND CARRIER MEANS**

(57)    A communication terminal (70) includes: a display (706) configured to display a part of a whole image as a viewable-area image, the whole image having been captured at a distribution site that is remotely located from a browsing site where the communication terminal is provided; a storage unit (7003) configured to store target area information indicating a plurality of target areas at the distribution site; a reception unit (71) configured to receive, from the distribution site, target area designation information designating a particular target area of the plurality of target areas; and a display control unit (74) configured to control the display to display the viewable-area image including the particular target area, based on the target area information of the particular target area.

An image communication system (1) including the communication terminal (70), a method for displaying, performed by the communication terminal, and carrier means for causing a computer system to carry out the method for displaying are also provided.

FIG. 1A

**Description**

BACKGROUND

Technical Field

The present invention relates to a communication terminal, an image communication system, a method for displaying an image, and carrier means.

Related Art

Some image capturing devices are capable of capturing images in all directions using a plurality of wide-angle lenses or fisheye lenses. The image data captured using such image capturing device may be used in a system, which distributes the captured image data in real time to another site, to allow a user at the another site to view an image being captured at a site where the image capturing device is provided.

For example, Japanese Unexamined Patent Application Publication No. 2017-22587 describes a system in which images captured by a plurality of cameras at a remote site are displayed at a terminal, such that a user at the terminal is able to view the remote site.

However, there may be some cases in which a specific location at the remote site where the image is captured needs attention from the user at the terminal. In such cases, the image capturing device needs to be locally operated to capture an image of the specific location to be distributed to the terminal to be viewed by the user.

SUMMARY

In one aspect, a communication terminal includes a display that displays a part of a whole image as a viewable-area image, the whole image having been captured at a distribution site that is remotely located from a browsing site where the communication terminal is provided, a storage unit that stores target area information indicating a plurality of target areas at the distribution site; a reception unit that receives, from the distribution site, target area designation information designating a particular target area of the plurality of target areas; and a display control unit that controls the display to display the viewable-area image including the particular target area, based on the target area information of the particular target area.

In one aspect, an image communication system is provided, which includes one or more of the above-described communication terminal, and a distribution system. The distribution system includes an image capturing device that captures the whole image covering the distribution site; and a distribution terminal that transmits the whole image captured at the distribution site to the communication terminal at the browsing site.

In one aspect, a method for displaying, performed by the above-described communication terminal is provided.

In one aspect, carrier means such as a recording medium storing a program code for carrying out the method for displaying is provided.

With this configuration, an image of the distribution site corresponding to the target area designated at the distribution site is displayed at the browsing site, without requiring direct operation on the image capturing device.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1A is a left side view of an image capturing device, according to embodiments;
FIG. 1B is a front view of the image capturing device of FIG. 1A, according to embodiments;
FIG. 1C is a plan view of the image capturing device of FIG. 1A, according to embodiments;
FIG. 2 is an illustration for explaining how a user uses the image capturing device, according to embodiments;
FIG. 3A is an illustration of a front side of a hemispherical image captured by the image capturing device, according to embodiments;
FIG. 3B is an illustration of a back side of a hemispherical image captured by the image capturing device, according to embodiments;
FIG. 3C is an illustration of an image represented by equirectangular projection, according to embodiments;
FIG. 4A is a view illustrating the image in equirectangular projection covering a surface of a sphere, according to embodiments;
FIG. 4B is an illustration of a spherical image, according to embodiments;
FIG. 5 is a view illustrating positions of a virtual camera and a predetermined area (viewable area) in a case in which the spherical image is represented as a three-dimensional solid sphere according to embodiments;
FIG. 6A is a perspective view of FIGs. 5A and 5B, according to embodiments;
FIG. 6B is a view illustrating an image of the predetermined area on a display, according to embodiments;
FIG. 7 is a view illustrating a relation between predetermined-area information (viewable-area information) and a predetermined-area image (viewable-area image) according to embodiments;
FIG. 8 is a view illustrating points in a three-dimensional Euclidean space defined in spherical coordinates, according to embodiments;

FIG. 9 is a diagram illustrating an example of a general arrangement of an image communication system according to an exemplary embodiment;

FIG. 10 is a schematic diagram illustrating a configuration of the image communication system of FIG. 9, according to the exemplary embodiment;

FIG. 11 is a diagram illustrating an example of a hardware configuration of the image capturing device in the image communication system of FIG. 9, according to the exemplary embodiment;

FIG. 12 is a diagram illustrating an example hardware configuration of a distribution terminal, a communication management system, a communication terminal, and a target area designation device, according to the exemplary embodiment;

FIG. 13 is a diagram illustrating an example functional configuration of the image communication system of FIG. 9 according to the exemplary embodiment;

FIG. 14 is another diagram illustrating an example functional configuration of the image communication system of FIG. 9 according to the exemplary embodiment;

FIG. 15A is a conceptual diagram illustrating an example of image capturing device management table;

FIG. 15B is a conceptual diagram illustrating an example of image type management table;

FIG. 16 is a conceptual diagram illustrating an example of target area management table;

FIG. 17A is a conceptual diagram illustrating an example of session management table;

FIG. 17B is a conceptual diagram illustrating an example of image type management table;

FIG. 18A is a conceptual diagram illustrating an example of predetermined area management table;

FIG. 18B is a conceptual diagram illustrating an example of installation information management table;

FIG. 19 is a conceptual diagram illustrating an example of distribution site management table;

FIG. 20A is a conceptual diagram illustrating an example of image type management table;

FIG. 20B is a conceptual diagram illustrating an example of predetermined area management table;

FIG. 21 is a conceptual diagram illustrating an example of target area management table;

FIG. 22 is a sequence diagram illustrating processing of controlling participation in a communication session, performed by the image communication system of FIG. 9, according to an exemplary embodiment;

FIG. 23 is a diagram illustrating an example screen for selecting a communication session;

FIG. 24 is a sequence diagram illustrating processing of managing image type information in the image communication system of FIG. 9, according to an exemplary embodiment;

FIG. 25 is a sequence diagram illustrating processing of transmitting captured image data and audio data, performed by the image communication system of FIG. 9, according to an exemplary embodiment.

FIG. 26 is a sequence diagram illustrating processing to display a predetermined-area image according to an exemplary embodiment;

FIG. 27 is a sequence diagram illustrating processing of displaying the target area, performed by the image communication system of FIG. 9, according to an exemplary embodiment;

FIG. 28 is a flowchart illustrating an example processing of displaying a target area at the communication terminal of FIG. 9, according to an exemplary embodiment; and

FIG. 29 is a sequence diagram illustrating modified example of processing to display a target area, performed by the image communication system of FIG. 9, according to an exemplary embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present invention are described with reference to the drawings. In the description of the drawings, the same elements are denoted by the same reference numerals, and redundant descriptions thereof are omitted.

Generating Spherical Image

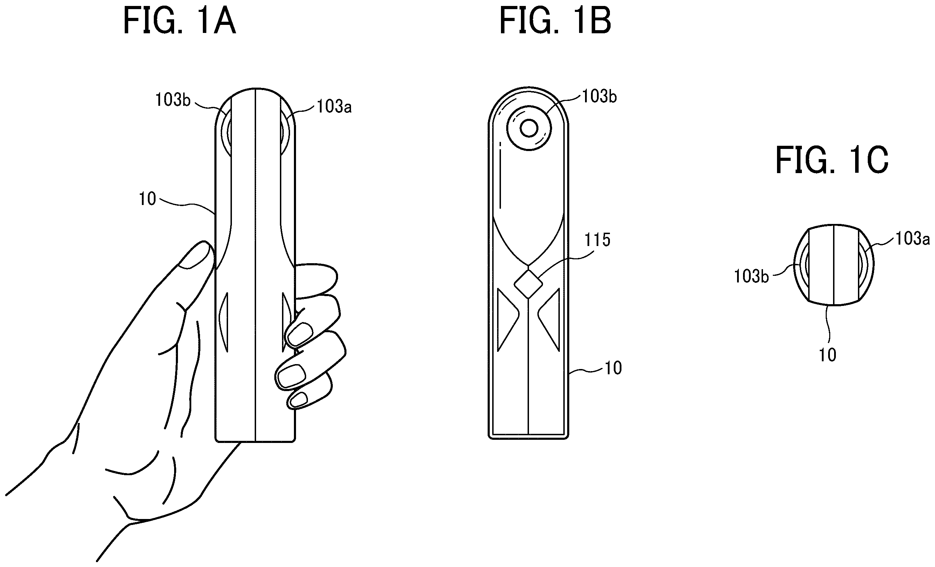

Referring to FIGs. 1 to 8, operation of generating a spherical image is described according to exemplary embodiments.

First, referring to FIGs. 1A to 1C, an external view of an image capturing device 10 is described according to the exemplary embodiments. The image capturing device 10 is a digital camera for capturing images from which a 360-degree spherical image is generated. FIG. 1A is a left side view of the image capturing device 10. FIG. 1B is a front view of the image capturing device 10. FIG.1C is a plan view of the image capturing device 10.

As illustrated in FIG. 1A, the image capturing device 10 has a shape such that a person can hold it with one hand. Further, as illustrated in FIGs. 1A, 1B, and 1C, the image capturing device 10 includes an imaging element 103a provided on a front side (anterior side) and an imaging element 103b provided on a back side (rear side), on its upper section.

These imaging elements (image sensors) 103a and 103b are used in combination with optical members (e.g., lenses 102a and 102b, described below), each being configured to capture a hemispherical image having an angle of view of 180 degrees or wider. As illustrated in FIG. 1B, the image capturing device 10 further includes an operation unit 115 such as a shutter button on a rear side of the image capturing device 10, which is opposite of the front side of the image capturing device 10.

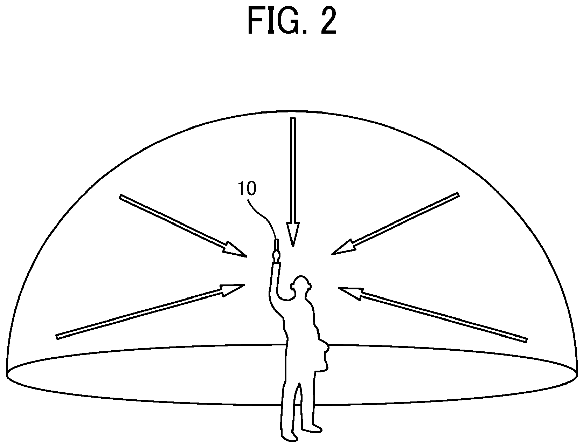

Next, referring to FIG. 2, a description is given of a situation where the image capturing device 10 is used. FIG. 2 is an illustration for explaining how a user uses the image capturing device, according to embodiments. As illustrated in FIG. 2, for example, the image capturing device 10 is used for capturing objects surrounding the user who is holding the image capturing device 10 in his or her hand. The imaging element 103a and the imaging element 103b illustrated in FIGs. 1A to 1C capture the objects surrounding the user to obtain two hemispherical images.

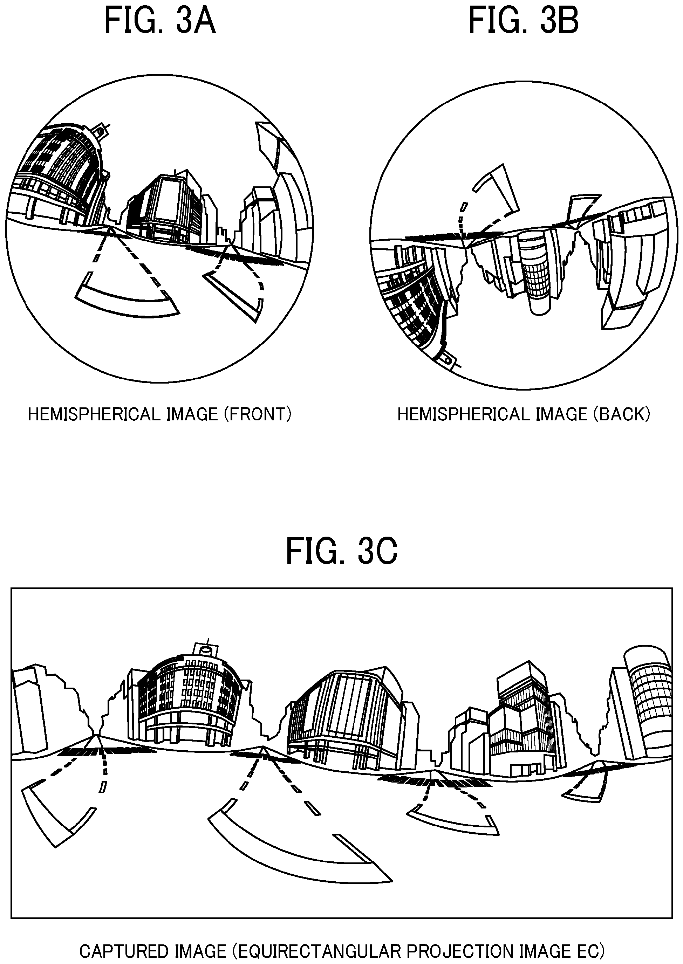

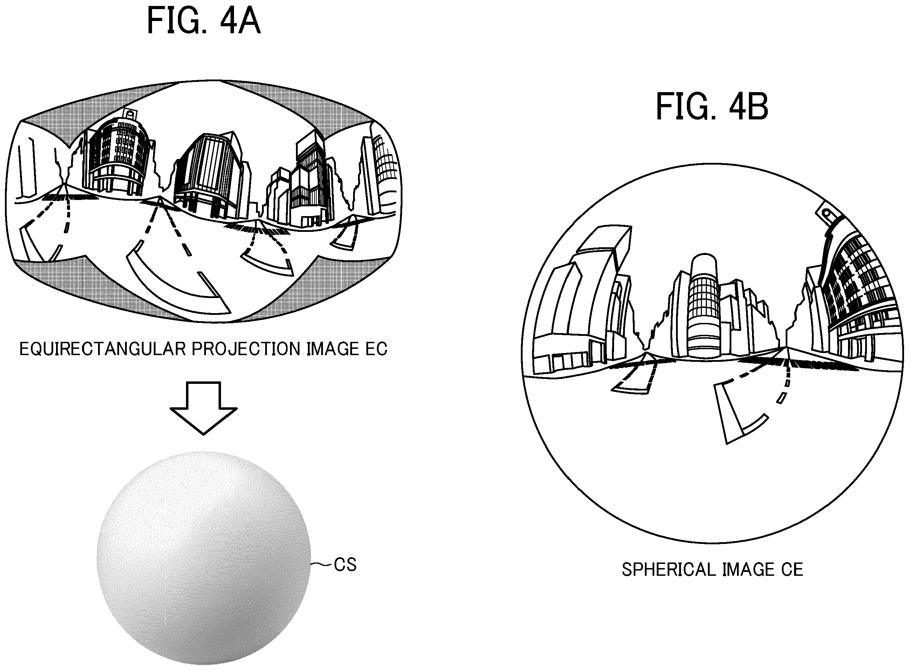

Next, referring to FIGs. 3A to 3C and FIGs. 4A and 4B, a description is given of an overview of an operation of generating an equirectangular projection image EC and a spherical image CE from the images captured by the image capturing device 10. FIG. 3A is a view illustrating a hemispherical image (front side) captured by the image capturing device 10. FIG. 3B is a view illustrating a hemispherical image (back side) captured by the image capturing device 10. FIG. 3C is a view illustrating an image in equirectangular projection, which is referred to as an "equirectangular projection image" (or equidistant cylindrical projection image) EC. FIG. 4A is a conceptual diagram illustrating an example of how the equirectangular projection image is mapped to a surface of a sphere. FIG. 4B is a view illustrating the spherical image.

As illustrated in FIG. 3A, an image captured by the imaging element 103a is a curved hemispherical image (front side) taken through the lens 102a. Further, as illustrated in FIG. 3B, an image captured by the imaging element 103b is a curved hemispherical image (back side) taken through the lens 102b. The image capturing device 10 combines the hemispherical image (front side) and the hemispherical image (back side), which are reversed by 180-degree from each other, to generate the equirectangular projection image EC as illustrated in FIG. 3C.

The image capturing device 10 uses Open Graphics Library for Embedded Systems (OpenGL ES) to map the equirectangular projection image EC so as to cover the sphere surface as illustrated in FIG. 4A, to generate the spherical image CE as illustrated in FIG. 4B. That is, the spherical image CE is represented as the equirectangular projection image EC, which corresponds to a surface facing a center of the sphere CS. It should be noted that OpenGL ES is a graphic library used for visualizing two-dimensional (2D) and three-dimensional (3D) data. The spherical image CE is either a still image or a moving image.

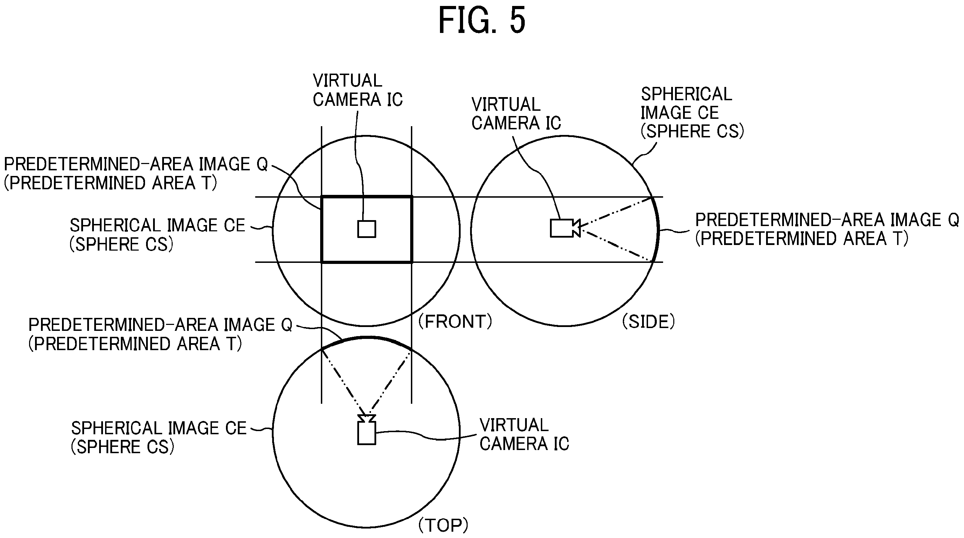

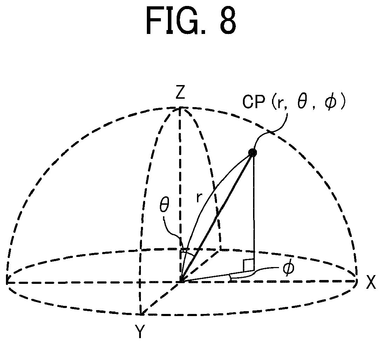

Since the spherical image CE is an image attached to the sphere surface to cover the sphere surface, as illustrated in FIG. 4B, a part of the image may look distorted when viewed from the user, providing a feeling of strangeness. To resolve this strange feeling, the image capturing device 10 displays an image of a predetermined area T, which is a part of the spherical image CE, as a flat image having fewer curves. The predetermined area is, for example, a part of the spherical image CE that is viewable by the user. In this disclosure, the image of the predetermined area, which is viewable, may be referred to as a "predetermined-area image" or "viewable-area image" Q. That is, the term "predetermined-area image" and "viewable-area image" may be used interchangeably. Hereinafter, a description is given of displaying the predetermined-area image Q with reference to FIG. 5 and FIG. 8.

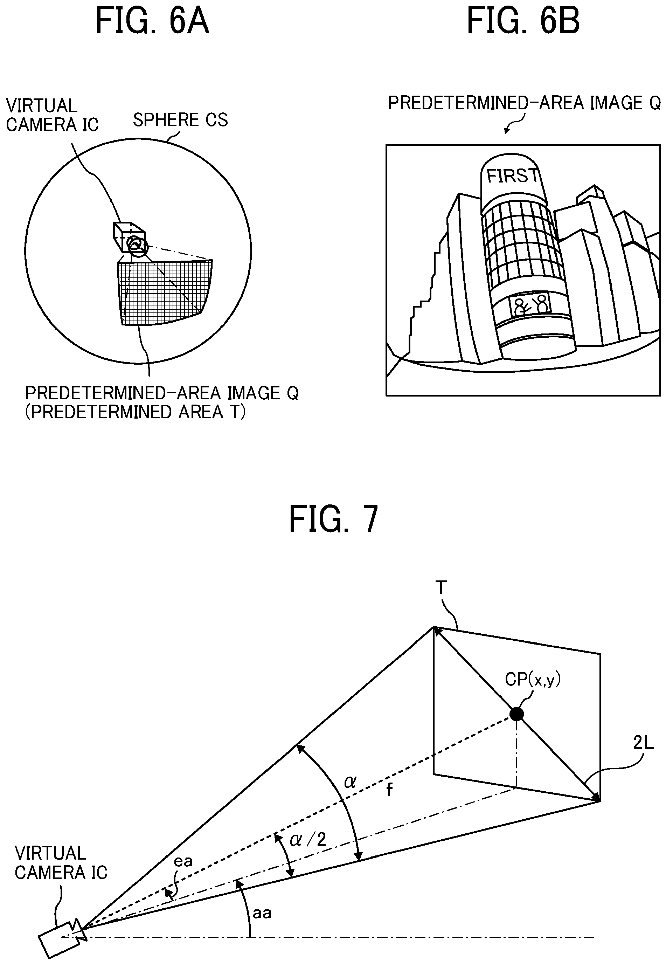

FIG. 5 is a view illustrating positions of a virtual camera IC and a predetermined area T in a case in which the spherical image is represented as a three-dimensional solid sphere. The virtual camera IC corresponds to a position of a point of view (viewpoint) of a user who is viewing the spherical image CE represented as a surface area of the three-dimensional solid sphere CS. FIG. 6A is a perspective view of the spherical image CE illustrated in FIG. 5. FIG. 6B is a view illustrating the predetermined-area image Q when displayed on a display. In FIG. 6A, the spherical image CE illustrated in FIG. 5 is represented as a surface area of the three-dimensional (3D) solid sphere CS. Assuming that the spherical image CE having been generated is a surface area of the solid sphere CS, the virtual camera IC is inside of the spherical image CE as illustrated in FIG. 5. The predetermined area T in the spherical image CE is an imaging area of the virtual camera IC. Specifically, the predetermined area T is specified by predetermined-area information indicating an imaging direction and an angle of view of the virtual camera IC in a three-dimensional virtual space containing the spherical image CE. In addition, zooming in the viewable area T is also determined by bringing the virtual camera IC closer to or away from the spherical image CE. The predetermined-area image Q is an image of the predetermined area T, in the spherical image CE. The predetermined area T is defined by the angle of view $\alpha$ and a

distance f from the virtual camera IC to the spherical image CE (see FIG. 7).

The predetermined-area image Q, which is an image of the predetermined area T illustrated in FIG. 6A, is displayed on a display as an image of an imaging area of the virtual camera IC, as illustrated in FIG. 6B. FIG. 6B illustrates the predetermined-area image Q represented by the predetermined-area information that is set by default. The following explains the position of the virtual camera IC, using an imaging direction (ea, aa) and an angle of view α of the virtual camera IC. In another example, the predetermined area T is identified by an imaging area (X, Y, Z) of the virtual camera IC, i.e., the predetermined area T, rather than the angle of view α and the distance f.

Referring to FIG. 7, a relation between the predetermined-area information and the image of the predetermined area T is described according to the embodiment. FIG. 7 is a view illustrating a relation between the predetermined-area information and the image of the predetermined area T. As illustrated in FIG. 7, "ea" denotes an elevation angle, "aa" denotes an azimuth angle, and "α" denotes an angle of view, respectively, of the virtual camera IC. The position of the virtual camera IC is adjusted, such that the point of gaze of the virtual camera IC, indicated by the imaging direction (ea, aa), matches the center point CP (x,y) of the predetermined area T as the imaging area of the virtual camera IC. As illustrated in FIG. 7, when it is assumed that a diagonal angle of the predetermined area T specified by the angle of view α of the virtual camera IC is α, the center point CP (x,y) provides the parameters (x, y) of the predetermined-area information. The predetermined-area image Q is an image of the predetermined area T, in the spherical image CE. "f" denotes a distance from the virtual camera IC to the central point CP (x,y) of the predetermined area T. "L" is a distance between the center point CP (x,y) and a given vertex of the predetermined area T (2L is a diagonal line). In FIG. 7, a trigonometric function equation generally expressed by the following equation 1 is satisfied.

$$[\text{Equation 1}]$$
$$L/f = \tan(\alpha/2)$$

The image capturing device 10 described above is an example of an image capturing device capable of acquiring a wide-angle view image. In this disclosure, the spherical image is an example of a wide-angle view image. Here, the wide-angle view image is generally an image taken with a wide-angle lens, such as a lens capable of taking a range wider than a range that the human eye can perceive. Further, the wide-angle view image is generally an image taken with a lens having a focal length of 35 mm or less in terms of 35 mm film.

FIG. 8 is a view illustrating points in a three-dimensional Euclidean space defined in spherical coordinates, according to the embodiment. A positional coordinate (r, θ, φ) is given when the center point CP is represented by a spherical polar coordinate system. The positional coordinate (r, θ, φ) represents a radius vector, a polar angle, and an azimuth angle. The radius vector r is a distance from the origin of the three-dimensional virtual space including the spherical image to the center point CP. Accordingly, the radius vector r is equal to "f". FIG. 8 illustrates the relation between these items. In the following description of the embodiment, the positional coordinates (r, θ, φ) of the virtual camera IC is used.

Overview of Image Communication System

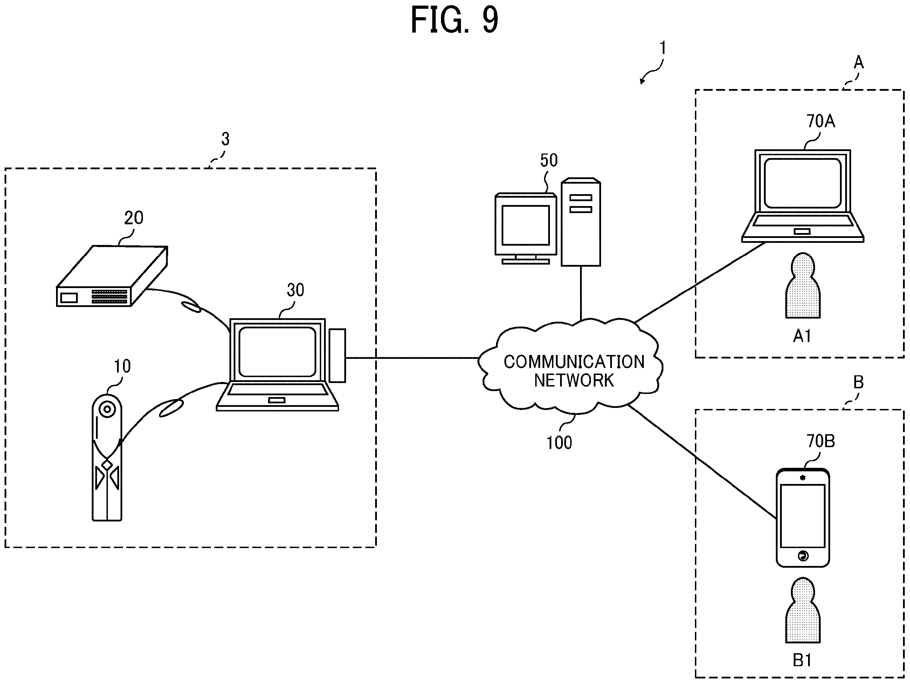

Referring to FIG. 9, an overview of the image communication system is described according to the first embodiment. FIG. 9 is a diagram illustrating an example of a general arrangement of the image communication system 1 according to the first embodiment. The image communication system 1 illustrated in FIG. 9 causes a captured image such as a video image distributed from a distribution site to be displayed at a plurality of browsing sites.

The browsing site, which may be referred to as a viewer site, is a site where the user viewing the image resides. Accordingly, a wide range image (for example, the spherical image) captured at the distribution site can be browsed at the plurality of browsing sites in real time.

As illustrated in FIG. 9, the image communication system 1 includes the image capturing device 10, a target area designation device 20, and a distribution terminal 30 at the distribution site, a communication management system 50, and communication terminals 70A and 70B (hereinafter collectively referred to as the communication terminal 70 unless they need to be distinguished from each other) at a plurality of browsing sites (browsing site A and browsing site B).

The distribution terminal 30, the communication management system 50, and the communication terminal 70 in the image communication system 1 are each communicable with one another via a communication network 100. The communication network 100 is implemented by the Internet, mobile communication network, local area network (LAN), etc. The communication network 100 may include, in addition to a wired network, a wireless network in compliance with such as 3rd Generation (3G), 4th Generation (4G), 5th Generation (5G), Wireless Fidelity (Wi-Fi; Registered Trademark),Worldwide Interoperability for Microwave Access (WiMAX), Long Term Evolution (LTE), etc.

The image capturing device 10, the target area designation device 20, and the distribution terminal 30 at the distribution site together operate as a distribution system 3. The image capturing device 10 is a special digital camera, which captures an image of an object or surroundings such as scenery to obtain two hemispherical images, from which the spherical image is generated, as described above referring to FIGs. 1 to 7. The captured image obtained by the image capturing device 10 may be a video image or a still image, or both of the video image and the still image. Further, the captured image may be provided with audio.

The target area designation device 20 is a dedicated device for designating a target area, which is a specific location at the distribution site. The target area designation device 20 is previously disposed at a specific location, or at a location close to the specific location, of the distribution site, such that the target area designation device 20 is able to detect a trouble such as abnormality at the specific location of the distribution site.

The distribution terminal 30 distributes an image acquired from the image capturing device 10 via a wired cable such as a universal serial bus (USB) cable to the communication terminal 70 via the communication management system 50. The distribution terminal 30 further distributes target area designation information, acquired from the target area designation device 20 via a wired cable such as a USB cable, to the communication terminal 70 via the communication management system 50.

The distribution site subjected to control by the image communication system 1 is not limited to a single site, such that the image communication system 1 may control a plurality of sites. The connection between the distribution terminal 30, and each of the image capturing device 10 and the target area designation device 20, may be a wireless connection using short-range wireless communication, for example, instead of a wired connection using a wired cable.

The communication management system 50 controls communication between the distribution terminal 30 and the communication terminal 70. Further, the communication management system 50 manages information on types (a general image type and a special image type) of image data to be exchanged in the communication between the distribution terminal 30 and the communication terminal 70. In this embodiment, a special image is a spherical image, and a general image is a planar image. The communication management system 50 is provided, for example, at a service provider that provides video communication service.

The communication management system 50 may be configured by a single computer or a plurality of computers to which divided portions (functions) are arbitrarily allocated.

All or a part of the functions of the communication management system 50 may be implemented by a server computer residing on a cloud network or a server computer residing on an on-premise network.

The communication terminal 70 is a computer such as a PC operated by a user at each browsing site. The communication terminal 70 displays an image (still image or moving image) distributed from the distribution terminal 30. The communication terminal 70 acquires a spherical image, which is a captured image captured by the image capturing device 10, via the communication network 100. The communication terminal 70 is installed with OpenGL ES, which enables the communication terminal 70 to generate predetermined-area information that indicates a partial area of a spherical image, or to generate a predetermined-area image from a spherical image that is transmitted from the distribution terminal 30. Here, the communication terminal 70A is disposed at the browsing site A where a user A1 is present, and the communication terminal 70B is disposed at the browsing site B where the user B is present.

The arrangement of the terminals and devices (communication terminal, image capturing device, and distribution terminal), and users illustrated in FIG. 9 is just an example, and any other suitable arrangement will suffice. Examples of the communication terminal 70 are not limited to a PC, but include a tablet terminal, a mobile phone such as a smartphone, a wearable terminal, a projector, a video conference (teleconference) terminal, an Interactive White Board (IWB: electronic whiteboard with mutual communication capability), and a telepresence robot.

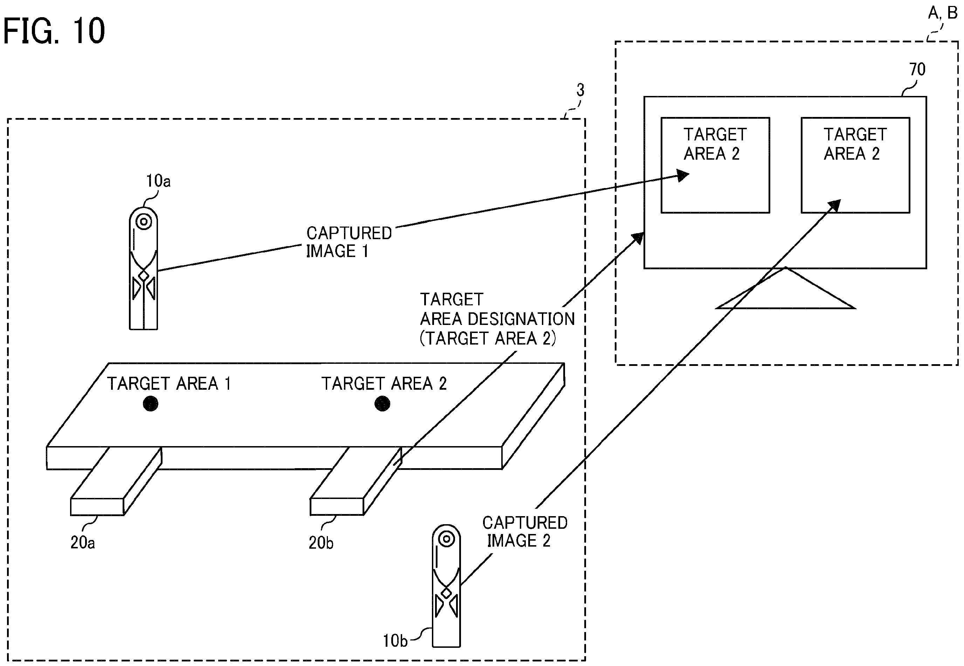

Referring to FIG. 10, description is given of an overview of the image communication system 1 according to the exemplary embodiment. FIG. 10 is a schematic diagram illustrating a configuration of the image communication system 1 according to the embodiment. The distribution site illustrated in FIG. 10 is, for example, a factory or a server room. Examples of the distribution site are not limited to a factory or a server room, and may include any space that the user at the browsing site desires to view the distribution site that is remotely located, such as an office floor, a school, a warehouse, a construction site, and a store. FIG. 10 illustrates a state in which a plurality of image capturing devices 10 (image capturing devices 10a and 10b) and a plurality of target area designating devices 20 (target area designating devices 20a and 20b) are provided at the distribution site. The image capturing device 10 is arranged at predetermined intervals in a work place such as a factory line. With the plurality of image capturing devices 10 at the distribution site, an image that entirely covers the distribution site is captured. The image capturing device 10 is a photographing device capable of capturing a wide-range image, such as a spherical image as described above, while keeping its physical location unchanged. The communication terminal 70 at the browsing site displays captured images captured by the plurality of image capturing devices 10. Specifically, in this example, the communication terminal 70 displays the captured image 1 captured by the image capturing device 10a, and the captured image 2 captured by the image capturing device 10b. The number of image capturing devices 10 at the distribution site is not limited to two as described above.

The target area designation device 20 is disposed at a specific location of the distribution site and designates a target area corresponding to its installed location. The target area designation device 20a designates, for example, a target area 1, as a candidate of a target area of the distribution site for viewing by the user at the browsing site. Similarly, the target area designation device 20b designates, for example, a target area 2, which is a candidate of a target area of the distribution site for viewing by the user at the browsing site.

FIG. 10 illustrates an example case in which the target area 2 of the distribution site is displayed to the user at the browsing site to notify the user of a trouble occurring at the target area 2. When the trouble occurs at the target area 2, the target area designation device 20b transmits target area designation information to the communication terminal 70. The communication terminal 70 refers to target area information, which is previously registered, to obtain information corresponding to the received target area designation information, and controls to change a portion of the captured image that is displayed such that the target area 2 is displayed on a screen. More specifically, the communication terminal 70 previously stores the target area information indicating the location of each target area (in this example, the target area 1 and the target area 2). In response to reception of the target area designation information that designates the target area 2, the communication terminal 70 refers to the coordinate of the target area 2 to display an image containing the target area. In this way, the communication terminal 70 can change displays of all captured images at the browsing sites such that each captured image being displayed contains the target area 2.

If a plurality of captured images, captured by a plurality of image capturing devices that are remotely located, are displayed at one or more browsing sites, it has been difficult for the user to determine which captured image, taken by which image capturing device, should be viewed, to grasp information on a specific location of the distribution site. In some cases, users at different browsing sites want to browse different places. In such case, operations (for example, a pan-tilt-zoom (PTZ) operation) on the image capturing device by different users may conflict with each other. It has been difficult to enable different users to browse different places of the same distribution site. For example, while a spherical image as described above can be captured by the image capturing device, a plurality of image capturing devices may be necessary to cover an entire distribution site. In such case, the user may want to individually operate each of a plurality of image capturing devices to display a target location as desired by each user. It has been difficult for the user to intuitively operate the image capturing device. In view of the above, the image communication system 1 enables a plurality of users to view different areas of the distribution site by using captured images acquired from the image capturing devices, by intuitive operation on a display screen.

Hardware Configuration

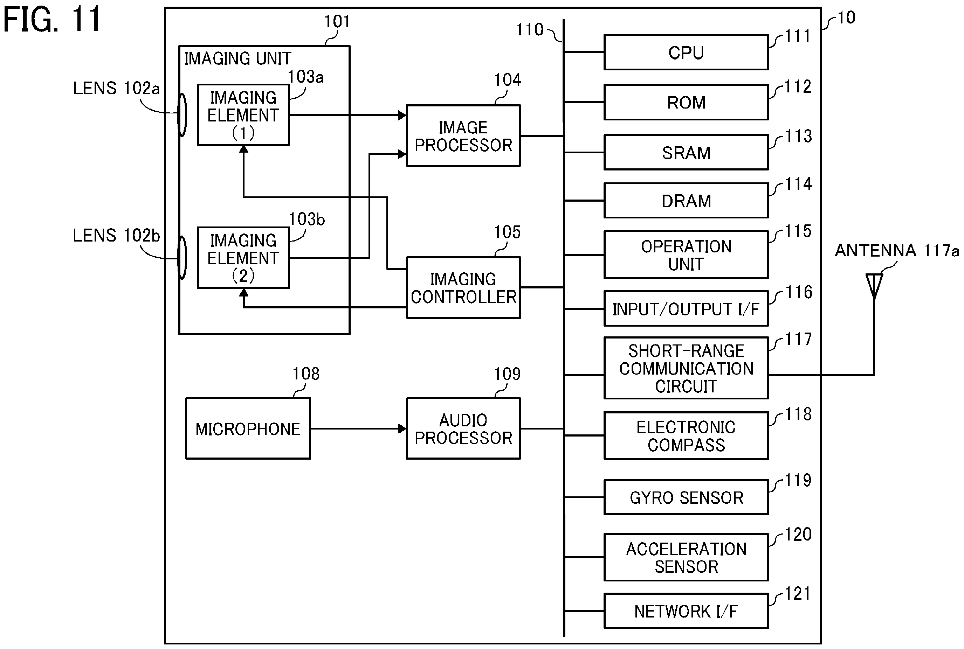

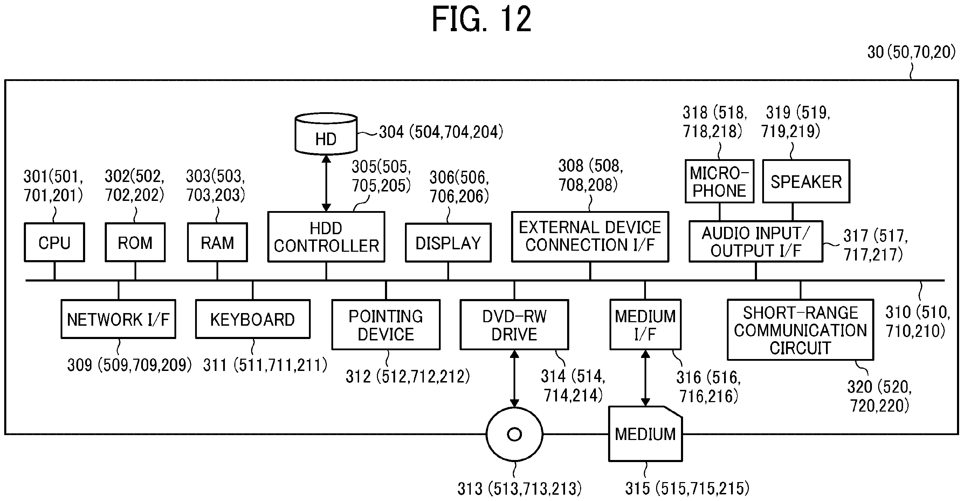

Next, referring to FIGs. 11 and 12, hardware configurations of each apparatus, device, and terminal of the image communication system are described according to the exemplary embodiment. In the hardware configurations illustrated in FIG. 11 and FIG. 12, components or elements may be added or deleted as needed.

Hardware Configuration of Image Capturing Device

First, referring to FIG. 11, a hardware configuration of the image capturing device 10 is described, according to the present embodiment. FIG. 11 is a diagram illustrating an example of a hardware configuration of the image capturing device 10. The following describes a case in which the image capturing device 10 is a spherical (omnidirectional) image capturing device having two imaging elements. However, the image capturing device 10 may include any suitable number of imaging elements, providing that it includes at least two imaging elements. In addition, the image capturing device 10 is not necessarily an image capturing device dedicated to omnidirectional image capturing. Alternatively, an external omnidirectional image capturing unit may be attached to a general-purpose digital camera or a smart phone to implement an image capturing device having substantially the same function as that of the image capturing device 10.

As illustrated in FIG. 11, the image capturing device 10 includes an imaging unit 101, an image processor 104, an imaging controller 105, a microphone 108, an audio processor 109, a central processing unit (CPU) 111, a read only memory (ROM) 112, a static random access memory (SRAM) 113, a dynamic random access memory (DRAM) 114, the operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121.

The imaging unit 101 includes two wide-angle lenses (so-called fish-eye lenses) 102a and 102b (collectively referred to as lens 102 unless they need to be distinguished from each other), each having an angle of view of equal to or greater than 180 degrees so as to form a hemispherical image. The imaging unit 101 further includes the two imaging elements 103a and 103b corresponding to the lenses 102a and 102b respectively. The imaging elements 103a and 103b each includes an imaging sensor such as a complementary metal oxide semiconductor (CMOS) sensor and a charge-coupled device (CCD) sensor, a timing generation circuit, and a group of registers. The imaging sensor converts an optical image formed by the lenses 102a and 102b into electric signals to output image data. The timing generation circuit generates horizontal or vertical synchronization signals, pixel clocks and the like for the imaging sensor. Various commands, parameters and the like for operations of the imaging elements 103a and 103b are set in the group of registers.

Each of the imaging elements 103a and 103b of the imaging unit 101 is connected to the image processor 104 via a parallel I/F bus. In addition, each of the imaging elements 103a and 103b of the imaging unit 101 is connected to the imaging controller 105 via a serial I/F bus such as an I2C bus. The image processor 104, the imaging controller 105, and the audio processor 109 are each connected to the CPU 111 via a bus 110. Furthermore, the ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires image data from each of the imaging elements 103a and 103b via the parallel I/F bus and performs predetermined processing on each image data. Thereafter, the image processor 104 combines these image data to generate data of the equirectangular projection image as illustrated in FIG. 3C.

The imaging controller 105 usually functions as a master device while the imaging elements 103a and 103b each usually functions as a slave device. The imaging controller 105 sets commands and the like in the group of registers of the imaging elements 103a and 103b via the serial I/F bus such as the I2C bus. The imaging controller 105 receives various commands from the CPU 111. Further, the imaging controller 105 acquires status data and the like of the group of registers of the imaging elements 103a and 103b via the serial I/F bus such as the I2C bus. The imaging controller 105 sends the acquired status data and the like to the CPU 111.

The imaging controller 105 instructs the imaging elements 103a and 103b to output the image data at a time when a shutter button of the operation unit 115 is pressed. In some cases, the image capturing device 10 displays a preview image on a display (e.g., a display of an external terminal such as a smartphone that performs short-range communication with the image capturing device 10 through the short-range communication circuit 117) or displays a moving image (movie). In case of displaying movie, the image data are continuously output from the imaging elements 103a and 103b at a predetermined frame rate (frames per minute).

Furthermore, the imaging controller 105 operates in cooperation with the CPU 111 to synchronize the time when the imaging element 103a outputs image data and the time when the imaging element 103b outputs the image data. It should be noted that, although the image capturing device 10 does not include a display in this embodiment, the image capturing device 1 may include the display. The microphone 108 converts sounds to audio data (signal). The audio processor 109 acquires the audio data output from the microphone 108 via an I/F bus and performs predetermined processing on the audio data.

The CPU 111 controls entire operation of the image capturing device 10, for example, by performing predetermined processing. The ROM 112 stores various programs for execution by the CPU 111. The SRAM 113 and the DRAM 114 each operates as a work memory to store programs loaded from the ROM 112 for execution by the CPU 111 or data in current processing. More specifically, in one example, the DRAM 114 stores image data currently processed by the image processor 104 and data of the equirectangular projection image on which processing has been performed.

The operation unit 115 collectively refers to various operation keys, a power switch, the shutter button, and a touch panel having functions of both displaying information and receiving input from a user, which can be used in combination. The user operates the operation unit 115 to input various image capturing (photographing) modes or image capturing (photographing) conditions.

The input/output I/F 116 collectively refers to an interface circuit such as a USB I/F that allows the image capturing device 10 to communicate data with an external medium such as an SD card or an external personal computer. The input/output I/F 116 supports at least one of wired and wireless communications. The data of the equirectangular projection image, which is stored in the DRAM 114, is stored in the external medium via the input/output I/F 116 or transmitted to an external terminal (apparatus) via the input/output I/F 116, as needed.

The short-range communication circuit 117 communicates data with the external terminal (apparatus) via the antenna 117a of the image capturing device 10 by short-range wireless communication such as NFC, Bluetooth, and Wi-Fi. The short-range communication circuit 117 transmits the data of equirectangular projection image to an external terminal (apparatus).

The electronic compass 118 calculates an orientation of the image capturing device 10 from the Earth's magnetism to output orientation information. This orientation and tilt information is an example of related information, which is metadata described in compliance with Exif. This information is used for image processing such as image correction of captured images. The related information also includes a date and time when the image is captured by the image capturing device 10, and a data size of the image data. The gyro sensor 119 detects the change in tilt of the image capturing device 10 (roll, pitch, yaw) with movement of the image capturing device 10. The change in angle is one example of related information (metadata) described in compliance with Exif. This information is used for image processing such as image correction of captured images. The acceleration sensor 120 detects acceleration in three axial directions. The image capturing device 10 calculates position (an angle with respect to the direction of gravity) of the image capturing device 10, based on the acceleration detected by the acceleration sensor 120. With the gyro sensor 119 and the acceleration sensor 120, the image capturing device 10 is able to correct tilt of image with high accuracy. The network I/F 121 is an interface for performing data communication, via such as a router, using the communication network 100 such as the Internet.

Hardware Configuration of Distribution Terminal

FIG. 12 is a diagram illustrating an example of a hardware configuration of the distribution terminal 30. Each hardware element of the distribution terminal 30 is denoted by a reference numeral in 300 series. The distribution terminal 30 is implemented by one or more computers. As illustrated in FIG. 12, the distribution terminal 3 includes a central processing unit (CPU) 301, a read only memory (ROM) 302, a random access memory (RAM) 303, a hard disk (HD) 304, a hard disk drive (HDD) controller 305, a display 306, an external device connection interface (I/F) 308, network I/F 309, a bus line 310, a keyboard 311, a pointing device 312, a digital versatile disc rewritable (DVD-RW) drive 314, a medium I/F 316, an audio input/output I/F 317, a microphone 318, a speaker 319, and a short-range communication circuit 320.

The CPU 301 controls entire operation of the distribution terminal 30. The ROM 302 stores a control program for controlling the CPU 301, such as an initial program loader (IPL). The RAM 303 is used as a work area for the CPU 301. The HD 304 stores various data such as a control program. The HDD controller 305 controls reading or writing of various data to or from the HD 304 under control of the CPU 301. The display 306 displays various information such as a cursor, menu, window, characters, or image. The display 306 is an example of a display (display device). In one example, the display 306 is a touch panel display provided with an input device (input means). The external device connection I/F 308 is an interface for connecting to various external devices. Examples of the external devices include, but are not limited to, a universal serial bus (USB) memory and a printer. The network I/F 309 is an interface that controls communication of data through the communication network 100. The bus line 310 is an address bus or a data bus, which electrically connects the elements in FIG. 12 such as the CPU 301.

The keyboard 311 is an example of an input device including a plurality of keys for inputting characters, numerical values, various instructions, and the like. The pointing device 312 is an example of an input device that allows a user to select or execute a specific instruction, select a target for processing, or move a cursor being displayed. The input device is not limited to the keyboard 311 and the pointing device 312, and may be a touch panel, a voice input device, or the like. The DVD-RW drive 314 reads and writes various data from and to a DVD-RW 313, which is an example of a removable recording medium.
In alternative to the DVD-RW, any recording medium may be used such as a DVD-R, Blu-ray Disc (Registered Trademark), etc. The medium I/F 316 controls reading or writing (storing) of data with respect to a recording medium 315 such as a flash memory. The microphone 318 is an example of audio collecting device, which is a built-in type, capable of inputting audio under control of the CPU 301. The audio I/O I/F 317 is a circuit for inputting or outputting an audio signal to the microphone 318 or from the speaker 319 under control of the CPU 301. The short-range communication circuit 320 communicates data with the external terminal (apparatus) by short-range wireless communication such as NFC, Bluetooth, and Wi-Fi.

Hardware Configuration of Communication Management System

FIG. 12 is a diagram illustrating an example of a hardware configuration of the communication management system 50. Each hardware element of the communication management system 50 is denoted by a reference numeral in 500 series. The communication management system 50 is implemented by one or more computers and has substantially the same configuration as that of the distribution terminal 30 as illustrated in FIG. 12, and thus the description of hardware configuration is omitted.

Hardware Configuration of Communication Terminal

FIG. 12 is a diagram illustrating an example of a hardware configuration of the communication terminal 70. Each hardware element of the communication terminal 70 is denoted by a reference numeral in 700 series. The communication terminal 70 is implemented by one or more computers having substantially the same configuration as that of the distribution terminal 30 as illustrated in FIG. 12, and thus the description of hardware configuration is omitted.

Hardware Configuration of Target Area Designation Device

FIG. 12 is a diagram illustrating an example of a hardware configuration of the target area designation device 20. Each hardware element of the target area designation device 20 is denoted by a reference numeral in 200 series. The target area designation device 20 is implemented by one or more computers having substantially the same configuration as that of the distribution terminal 30 as illustrated in FIG. 12, and thus description of hardware configuration is omitted.

Further, any one of the above-described control programs may be recorded in a file in a format installable or executable on a computer-readable recording medium for distribution. Examples of the recording medium include a CD-R (Compact Disc Recordable), a DVD (Digital Versatile Disk), a Blu-ray Disc, an SD card, and a USB memory. In addition, such recording medium may be provided in the form of a program product to users within a certain country or outside that country. For example, the communication terminal 70 executes the control program to implement a method of displaying an image according to the present disclosure.

Functional Configuration

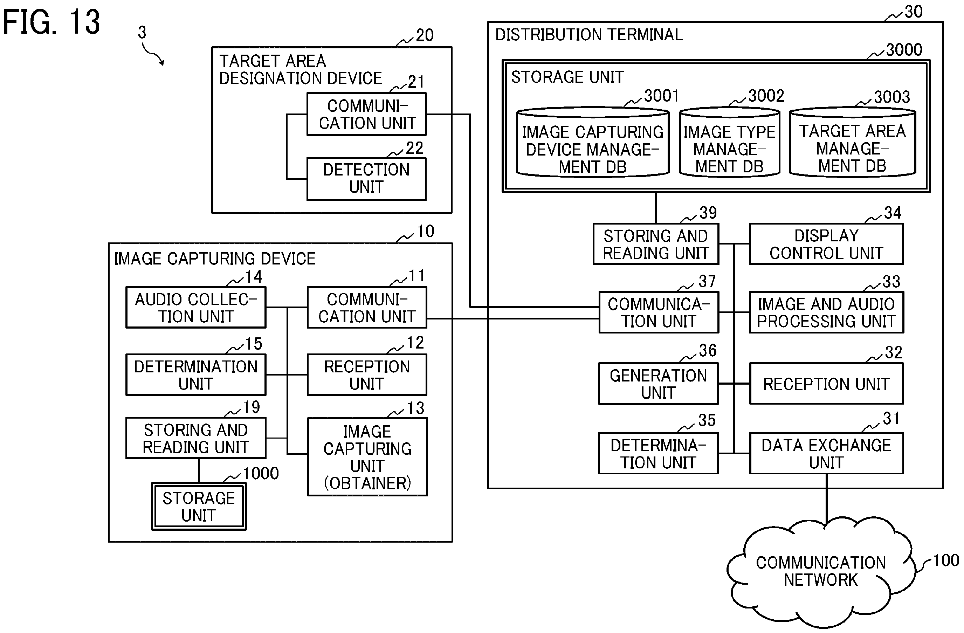

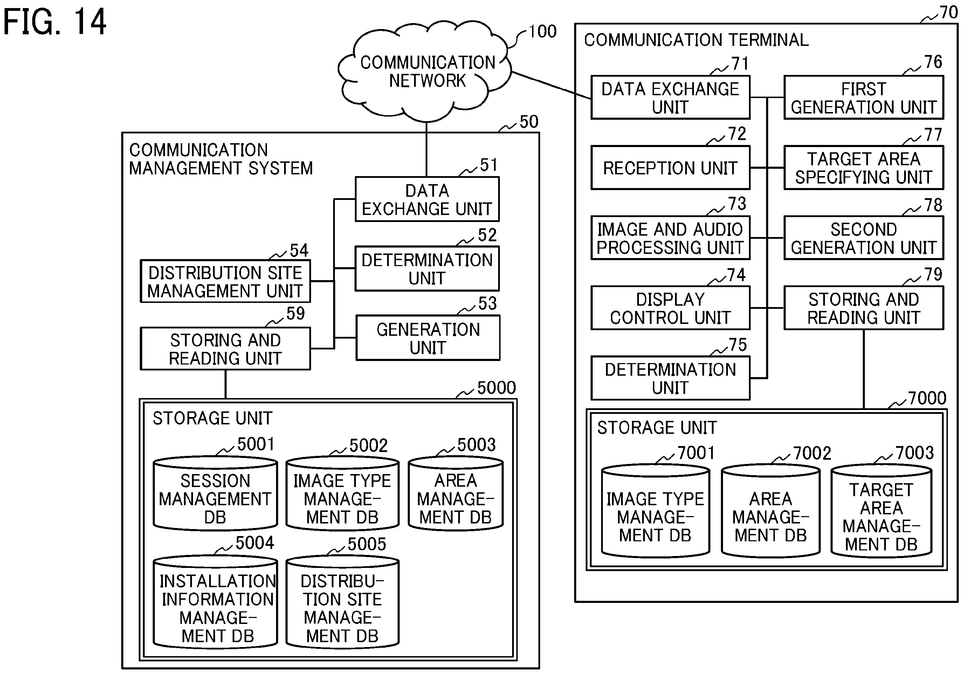

Referring to FIG. 13 to FIG. 21, a functional configuration of the image communication system 1 is described according to the embodiment. FIGs. 13 and 14 are diagrams illustrating an example functional configuration of the image communication system 1 according to the embodiment. FIGs. 13 and 14 illustrate a part of devices and terminals of FIG. 9, which are related to processing or operation to be described below.

Functional Configuration of Image Capturing Device

Referring to FIG. 13, a functional configuration of the image capturing device 10 is described according to the embodiment. The image capturing device 10 includes a communication unit 11, a reception unit 12, an image capturing unit 13, an audio collection unit 14, a determination unit 15, and a storing and reading unit 19. These units are functions that are implemented by or that are caused to function by operating any of the elements illustrated in FIG. 11 in cooperation with the instructions of the CPU 111 according to the control program for the image capturing device expanded from the SRAM 113 to the DRAM 114. The image capturing device 10 further includes a storage unit 1000, which is implemented by the ROM 112, the SRAM 113, or the DRAM 114 illustrated in FIG. 11. The storage unit 1000 stores a Globally Unique Identifier (GUID) identifying the own device (i.e., the image capturing device 10).

The communication unit 11 is implemented by instructions of the CPU 111, and transmits or receives various data or information to or from other device or terminal. The communication unit 11 communicates data with other device or terminal using, for example, the short-range communication circuit 117, based on short-range wireless communication technology. For example, the communication unit 11 communicates data with other device or terminal via any desired cable via the input/output I/F116. Furthermore, the communication unit 11 communicates data with other device or terminal via the communication network 100 via the network I/F121.

The reception unit 12 is implemented by the operation unit 115, which operates according to the instructions of the CPU 111, to receive various selections or inputs from the user. The image capturing unit 13 is implemented by the imaging unit 101, the image processor 104, and the imaging controller 105, illustrated in FIG. 11, each operating according to the instructions of the CPU 111. The image capturing unit 13 captures an image of the object or surroundings (for example, scenery) to obtain captured image data. The audio collecting unit 14 is implemented by the microphone 108 and the audio processor 109 illustrated in FIG. 11, which operates according to the instructions of the CPU 111. The audio collecting unit 14 collects sounds around the image capturing device 10. The determination unit 15, which is implemented by instructions of the CPU 111, performs various determinations.

The storing and reading unit 19, which is implemented by the instructions of the CPU 111, stores various data or information in the storage unit 1000 or reads out various data or information from the storage unit 1000.

Functional Configuration of Target Area Designation Device

Next, referring to FIG. 13, a functional configuration of the target area designation device 20 is described according to the embodiment. The target area designation device 20 includes a communication unit 21 and a detection unit 22. These units are functions that are implemented by or that are caused to function by operating any of the elements illustrated in FIG. 12 in cooperation with the instructions of the CPU 201 according to the control program for target area designation device read from the SSD 204 to the RAM 203.

The communication unit 21 is implemented by instructions of the CPU 201, and transmits or receives various data or information to or from other device or terminal. The communication unit 21 communicates data with other device or terminal using, for example, the short-range communication circuit 220, based on short-range wireless communication technology. For example, the communication unit 21 communicates data with other device or terminal via any desired cable via the external device connection I/F 208. Furthermore, the communication unit 21 communicates data with other device or terminal via the communication network 100 via the network I/F 209.

The detection unit 22 is implemented by instructions of the CPU 201, and detects designation of a target area corresponding to a specific location where the target area designation device 20 is provided. For example, when a trouble occurs at the specific location (target area) where the target area designation device 20 is provided, the detection unit 22 determines to designate the target area where the trouble occurs to be viewed by the user at the browsing site. The detection unit 22 may detect a trouble in various ways. In one example, the detection unit 22 may detect occurrence of the trouble based on recognition of an image taken at the distribution site. In another example, the detection unit 22 may detect occurrence of the trouble based on outputs from various sensors of the target area designation device 20. In another example, the detection unit 22 may detect designation of a target area in response to pressing of a dedicated button provided at the target area designation device 20, by an operator at the distribution site.

Functional Configuration of Distribution Terminal

Next, referring to FIG. 13, a functional configuration of the distribution terminal 30 is described according to the embodiment. The distribution terminal 30 includes a data exchange unit 31, a reception unit 32, an image and audio processing unit 33, a display control unit 34, a determination unit 35, a generation unit 36, a communication unit 37, and a storing and reading unit 39. These units are functions implemented by or caused to function by operating any of the hardware elements illustrated in FIG. 12 in cooperation with the instructions of the CPU 301 according to the distribution terminal control program expanded from the HD 304 to the RAM 303. The distribution terminal 30 further includes a storage unit 3000, which is implemented by the ROM 302, the RAM 303, and the HD 304, illustrated in FIG. 12.

The data exchange unit 31, which is implemented by the network I/F 309 that operates according to instructions of the CPU 301, transmits or receives various data or information to or from other device or terminal through the communication network 100.

The reception unit 32, which is implemented by the keyboard 311 or the pointing device 312 that operates according to instructions of the CPU 301, receives various selections or inputs from the user. The image and audio processing unit 33, which is implemented by the instructions of the CPU 301, applies image processing to the captured image data obtained by the image capturing device 10 capturing the object. The image and audio processing unit 33 further processes audio data, based on audio signals, which are converted from voice of the user by the microphone 318. Further, the image and audio processing unit 33 processes the captured image data received from the image capturing device 10 based on the image type information such as the source name. The display control unit 34 causes the display 306 to display an image based on the processed captured image data. More specifically, when the image type information indicates "special image", the image and audio processing unit 33 converts the captured image data such as hemispherical image data as illustrated in FIGs. 3A and 3B into spherical image data as illustrated in FIG. 4B, and further generates a predetermined-area image as illustrated in FIG. 6B.

The display control unit 34, which is implemented by the instructions of the CPU 301, controls the display 306 to display various screens including various images or texts. The determination unit 35, which is implemented by instructions of the CPU 301, performs various determinations. For example, the determination unit 35 determines an image type corresponding to captured image data received from, for example, the image capturing device 10.

The generation unit 36 is implemented by instructions of the CPU 301. The generation unit 36 generates a source name, which is one example of the image type information, according to a naming rule, based on a determination result generated by the determination unit 35 indicating a general image or a special image (that is, spherical image in this disclosure). For example, when the determination unit 35 determines that the image type corresponding to the received captured image data is a general image, the generation unit 36 generates a source name of "Video" that indicates a general image type. By contrast, when the determination unit 35 determines that the image type corresponding to the received captured image data is a special image, the generation unit 36 generates a source name of "Video_Theta" that indicates a special image type.

The communication unit 37, which is implemented by the short-range communication circuit 320 that operates according to the instructions of the CPU 301, performs data communication with the communication unit 11 of the image capturing device 10 and the communication unit 21 of the target area designation device 20, by short-range wireless communication technology such as NFC, Bluetooth, or WiFi. In the above description, the communication unit 37 and the data exchange unit 31 are independent from each other, however, the communication unit 37 and the data exchange unit 31 may be configured as a single unit.

The storing and reading unit 39, which is implemented by the instructions of the CPU 301, stores various data or information in the storage unit 3000 or reads out various data or information from the storage unit 3000.

Image Capturing Device Management Table

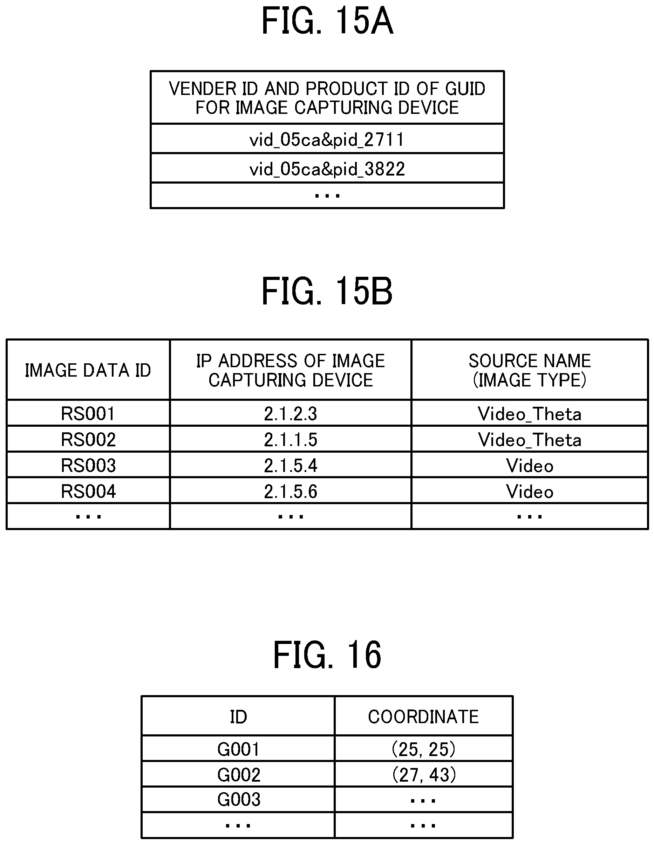

FIG. 15A is a conceptual diagram illustrating an example of image capturing device management table. The storage unit 3000 stores an image capturing device management DB 3001, which is implemented by the image capturing device management table as illustrated in FIG. 15A. The image capturing device management table stores a vendor ID and a product ID, obtainable from the GUID of an image capturing device that is configured to obtain two hemispherical images, from which a spherical image is generated. As the GUID, a combination of a vendor ID (VID) and a product ID (PID) used in a USB device is used, for example. The vendor ID and the product ID may be stored in the distribution terminal 30 before shipment or after shipment.

Image Type Management Table

FIG. 15B is a conceptual diagram illustrating an image type management table, according to the embodiment. The storage unit 3000 stores an image type management DB 3002, which is implemented by the image type management table as illustrated in FIG. 15B. The image type management table stores an image data identifier (ID), an internet protocol (IP) address, which is an example of an address of the image capturing device, and a source name, in association with one another. The image data ID is one example of image data identification information identifying image data to be distributed. The IP address of the image capturing device indicates an IP address of the image capturing device 10 that captures image data identified by an associated image data ID. The source name, which is associated with a specific image data ID, is a name for identifying an image capturing device that captures the image data identified by that image data ID associated with the source name. The source name is one example of image type information. The source name is a name generated by the distribution terminal 30 according to a predetermined naming rule.

The example of the image type management table illustrated in FIG. 15B indicates that four image capturing devices, whose IP addresses are respectively "2.1.2.3", "2.1.1.5", "2.1.5.4", and "2.1.5.6" transmit image data identified by the image data ID "RS001", "RS002", "RS003", and "RS004", respectively. Further, according to the image type management table illustrated in FIG. 15B, the image types represented by the source names of those four communication terminals are "Video_Theta", "Video_Theta", "Video", and "Video" that indicate the image types, which are " special image", "special image", "general image", and "general image", respectively. In this embodiment, a special image is a spherical image, and a general image is a planar image. The IP address is an example of destination information, and the destination information may be a media access control (MAC) address, a terminal identification (ID), or the like. Although the IP address is represented by simplifying the IPv4 address, the IP address may be IPv6. In addition, data other than the image data may be stored in the image type management table in association with the image data ID. Examples of the data other than the image data include audio data, and presentation material data to be shared on a screen between the distribution site and the browsing site.

Target Area Management Table

FIG. 16 is a conceptual diagram illustrating an example of a target area management table. The storage unit 3000 stores a target area management DB 3003, which is implemented by the target area management table as illustrated in FIG. 16. The target area management table stores a target area ID for identifying a target area at the distribution site and a coordinate value indicating a location of the target area in association with each other. In this example, the target area may be a specific point defined by a specific coordinate value, or a specific area including the specific point defined by the specific coordinate value.

Functional Configuration of Communication Management System

Next, referring to FIG. 14, description is given of the functional configuration of the communication management system 50 according to the embodiment. The communication management system 50 includes a data exchange unit 51, a determination unit 52, a generation unit 53, a distribution site management unit 54, and a storing and reading unit 59. These units are functions implemented by or caused to function by operating any of the hardware elements illustrated in FIG. 12 in cooperation with the instructions of the CPU 501 according to the control program for the communication management system expanded from the HD 504 to the RAM 503. The communication management system 50 further includes a storage unit 5000, which is implemented by the ROM 502, the RAM 503 and the HD 504 illustrated in FIG. 12.

The data exchange unit 51, which is implemented by the network I/F 509 that operates according to instructions of the CPU 501, transmits or receives various data or information to or from other device or terminal through the communication network 100.

The determination unit 52, which is implemented by instructions of the CPU 501, performs various determinations. The generation unit 53, which is implemented by instructions of the CPU 501, generates an image data ID and predetermined-area information. The generation unit 53 generates, for example, predetermined area information indicating a predetermined area in a captured image captured by the image capturing device 10. The distribution site management unit 54 is implemented by instructions of the CPU 501, and manages distribution site information indicating a state of the distribution site.

The storing and reading unit 59, which is implemented by the instructions of the CPU 501, stores various data or information in the storage unit 5000 or reads out various data or information from the storage unit 5000.

Session Management Table

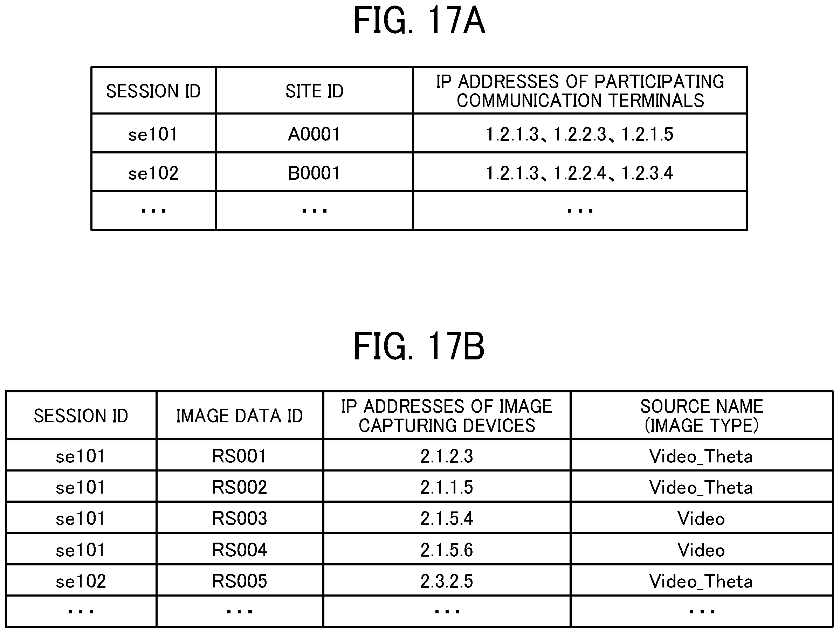

FIG. 17A is a conceptual diagram illustrating an example session management table. The storage unit 5000 stores a session management DB 5001, which is implemented by the session management table as illustrated in FIG. 17A. The session management table stores a session ID, a site ID, and an IP address(es) of a communication terminal(s) participating in the session, in association with each other. The session ID is one example of session identification information for identifying a session for image distribution. The session ID is generated for each virtual conference room. The session ID is also managed by each communication terminal, and is used when each communication terminal selects a communication session. The site ID is an example of site identification information for identifying a distribution site. The IP address of the participating communication terminal indicates the IP address of the communication terminal participating in the virtual conference room indicated by the associated session ID.

Image Type Management Table

FIG. 17B is a conceptual diagram illustrating an image type management table, according to the embodiment. The storage unit 5000 stores an image type management DB 5002, which is implemented by the image type management table as illustrated in FIG. 17B. The image type management table illustrated in FIG. 17B stores, in addition to the information items stored in the image type management table illustrated in FIG. 15B, the same session IDs as those stored in the session management table of 15A, in association with one another. The communication management system 50 stores the image data ID, IP address of the image capturing device, and image type information that are same as those stored in the distribution terminal 30 and the communication terminal 70. This enables the communication management system 50 to transmit the image type information, etc., to a communication terminal that is currently participating in video communication and another communication terminal that newly participates in the video communication by entering a virtual conference room of the video communication. Accordingly, the communication terminal that is already in the video communication and the communication terminal that is newly participates in the video communication do not have to exchange such information including the image type information.

Predetermined Area Management Table

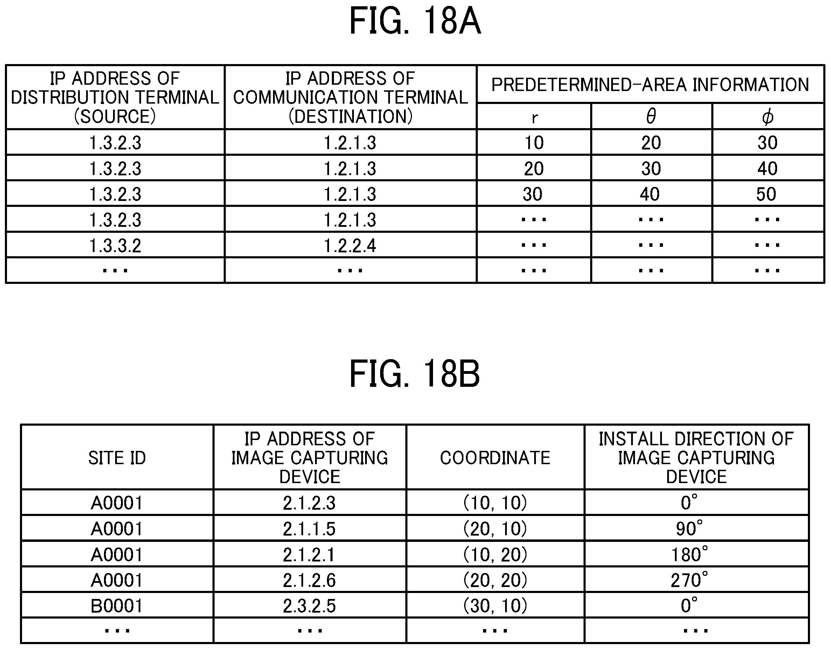

FIG. 18A is a conceptual diagram illustrating an example of predetermined area management table, according to the embodiment. The storage unit 5000 stores a predetermined area management DB 5003 (for simplicity, it is indicated as "area management DB 5003" in figure), which is implemented by the predetermined area management table as illustrated in FIG. 18A. The predetermined area management table stores an IP address of a distribution terminal as a transmission source of captured image data, an IP address of a communication terminal as a transmission destination of the captured image data, and predetermined-area information defining a predetermined-area image being displayed at the communication terminal as the transmission destination of the captured image data, in association with one another. In this example, the communication terminal that receives the captured image data becomes the transmission source of the predetermined-area information. The predetermined-area information is a conversion parameter used to convert a captured image to an image (predetermined-area image) of a predetermined area T of the captured image, as illustrated in FIG. 6A, FIG. 6B, and FIG. 7.
In the example of FIG. 18A, the predetermined area management table indicates, in the first row to the fourth row of the table, that the distribution terminal 30 whose IP address is "1.3.2.3" transmits captured image data, via the communication management system 50, to the communication terminal 70 whose IP address is "1.2.1.3". Further, the predetermined area management table of FIG. 18A indicates that the distribution terminal 30 whose IP address is "1.3.2.3" is a transmission source of four items of predetermined-area information, as indicated in the first row to the fourth row.

When the data exchange unit 51 newly receives predetermined-area information including a pair of the IP address of the communication terminal as the transmission source of the captured image data and the IP address of the communication terminal as the transmission destination of the captured image data, which is the same as the pair that is currently stored in the table, the storing and reading unit 59 overwrites currently managed predetermined-area information with the newly received predetermined-area information.

Installation Information Management Table

FIG. 18B is a conceptual diagram illustrating an example installation information management table. The storage unit 5000 stores an installation information management DB 5004, which is implemented by the installation information management table as illustrated in FIG. 18B. The installation information management table stores installation information that associates a site ID for identifying a distribution site, an IP address of the image capturing device 10 installed at the distribution site, a coordinate value indicating a location at which the image capturing device 10 is installed, and an installation direction of the image capturing device 10. Among them, the coordinate value indicates a coordinate value on a map of the distribution site where the image capturing device 10 is installed. The installation direction of the image capturing device 10 indicates a direction on the map that the front face of the image capturing device 10 faces. The installation information is determined and input by a person who is in charge of the distribution site or the distribution terminal 30.

Distribution Site Management Table

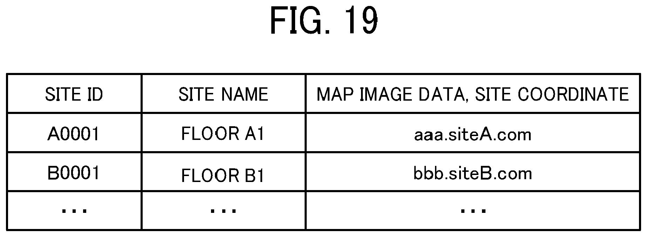

FIG. 19 is a conceptual diagram illustrating an example of a distribution site management table. The storage unit 5000 stores a distribution site management DB 5005, which is implemented by the distribution site management table as illustrated in FIG. 19. The distribution site management table stores a site ID and a site name for identifying a distribution site, and distribution site information indicating a state of the distribution site in association with each other. The distribution site information includes a uniform resource locator (URL) for accessing map image data indicating a map of the distribution site, and site coordinate information indicating a coordinate value of the distribution site. The communication terminal 70 accesses the URL transmitted from the communication management system 50, to obtain the map image data and the site coordinate information of the distribution site. The URL is an example of storage location information. The storage location information is not limited to the URL, and may be a uniform resource identifier (URI), for example.

Functional Configuration of Communication Terminal

Next, referring to FIG. 14, a functional configuration of the communication terminal 70 is described according to the embodiment. The communication terminal 70 includes a data exchange unit 71, a reception unit 72, an image and audio processing unit 73, a display control unit 74, a determination unit 75, a first generation unit 76, a target area specifying unit 77, a second generation unit 78, and a storing and reading unit 79. These units are functions implemented by or caused to function by operating any of the hardware elements illustrated in FIG. 12 in cooperation with the instructions of the CPU 701 according to the communication terminal control program expanded from the HD 704 to the RAM 703. The communication terminal 70 further includes a storage unit 7000, which is implemented by the ROM 702, the RAM 703, and the HD 704, illustrated in FIG. 12.

The data exchange unit 71, which is implemented by the network I/F 709 that operates according to instructions of the CPU 701, transmits or receives various data or information to or from other device or terminal through the communication network 100.

The reception unit 72, which is implemented by the keyboard 711 or the pointing device 712 that operates according to instructions of the CPU 701, receives various selections or inputs from the user. The image and audio processing unit 73, which is implemented by instructions of the CPU 701, implements the similar or substantially the similar function to that of the image and audio processing unit 33. The display control unit 74, which is implemented by the instructions of the CPU 701, controls the display 706 to display various screens including various images or texts. The determination unit 75, which is implemented by instructions of the CPU 701, performs various determinations.

The first generation unit 76, which is implemented by instructions of the CPU 701, implements the similar or substantially the similar function to that of the generation unit 36. The target area specifying unit 77, which is implemented by instructions of the CPU 701, identifies a target area at the distribution site where the image capturing device 10 is installed. The target area specifying unit 77 specifies the target area to be displayed on a display screen based on the target area designation information distributed from the distribution system 3 and the target area information stored in the target area management DB 7003.

The second generation unit 78, which is implemented by instructions of the CPU 701, generates predetermined-area information. The second generation unit 78 generates, for example, predetermined-area information indicating a predetermined area in a captured image captured by the image capturing device 10.

The storing and reading unit 79, which is implemented by the instructions of the CPU 701, stores various data or information in the storage unit 7000 or reads out various data or information from the storage unit 7000.

Image Type Management Table

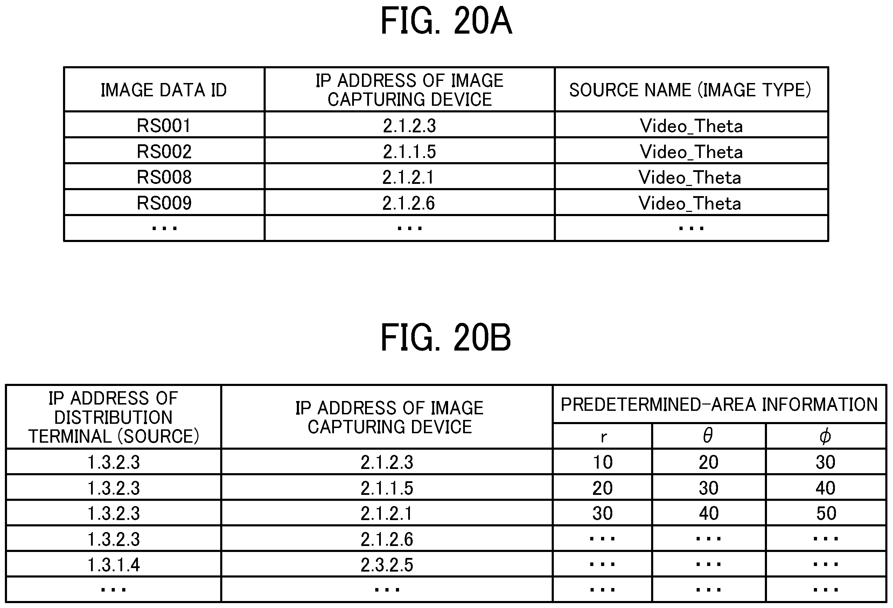

FIG. 20A is a conceptual diagram illustrating an image type management table, according to the embodiment. The storage unit 7000 stores an image type management DB 7001, which is implemented by the image type management table as illustrated in FIG. 20A. The image type management table has a data structure same as that of the image type management table of FIG. 15B, and description thereof is omitted.

Predetermined Area Management Table

FIG. 20B is a conceptual diagram illustrating an example of predetermined area management table, according to the embodiment. The storage unit 7000 stores a predetermined area management DB 7002, which is implemented by the predetermined area management table illustrated in FIG. 20B. The predetermined area management table stores an IP address of a distribution terminal as a transmission source of captured image data, an IP address of an image capturing device that has captured the captured image data, and predetermined-area information indicating a predetermined-area image being displayed at the communication terminal as the transmission destination of the captured image data, in association with one another. The predetermined-area information is a conversion parameter used to convert a captured image to an image (predetermined-area image) of a predetermined area T of the captured image, as illustrated in FIG. 6A, FIG. 6B, and FIG. 7.

Target Area Management Table

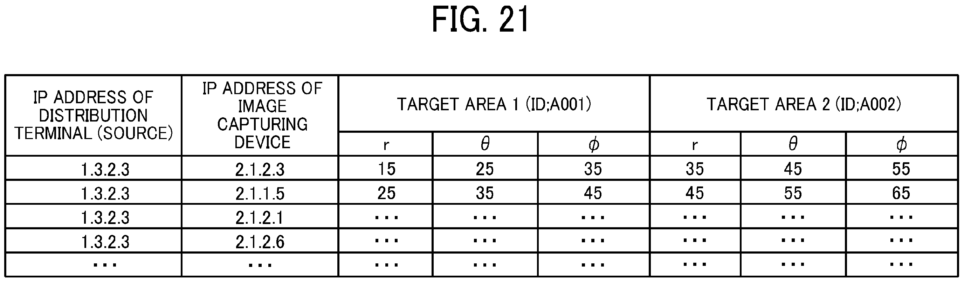

FIG. 21 is a conceptual diagram illustrating an example of a target area management table. The storage unit 7000 stores a target area management DB 7003, which is implemented by the target area management table as illustrated in FIG. 21. The target area management table stores an IP address of a distribution terminal as a transmission source of captured image data, an IP address of an image capturing device that has captured the captured image data, and target area information that is the predetermined-area information used for displaying the target area, in association with one another. The target area information includes, for each target area, predetermined area information (a radius vector r, a polar angle $\theta$, and an azimuth angle $\varphi$) indicating a direction and an angle of view for displaying the target area in the spherical image. The target area management table illustrated in FIG. 21 illustrates an example case in which two target areas are set in advance. For example, when a target area is designated, the communication terminal 70 performs perspective projection transformation on the spherical image distributed from the distribution terminal 30 as the transmission source, based on the target area information of the designated area that is stored in the target area management table. Accordingly, the communication terminal 70 is able to change a viewable area of the captured image to include the designated target area as indicated by the target area information.

Processes and Operations

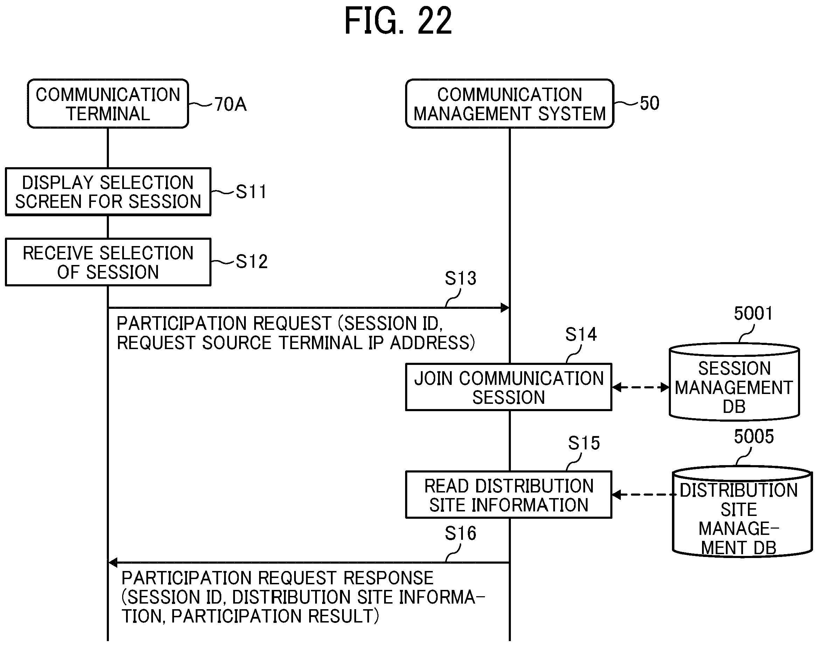

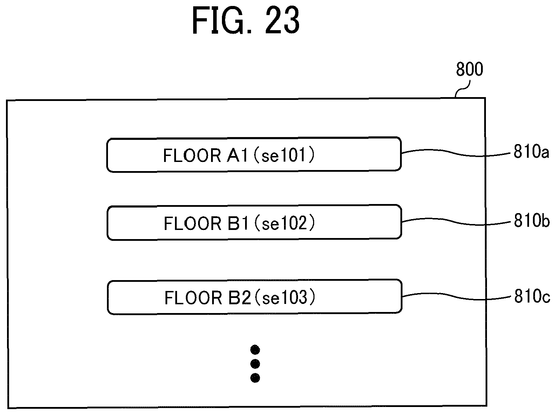

Next, referring to FIGs. 22 to 28, processes and operations of the image communication system 1 according to the embodiment will be described. Referring to FIG. 22 and FIG. 23, operation of processing a request for participation in a communication session is described, according to the embodiment. FIG. 22 is a sequence diagram illustrating operation of processing a request for participation in a communication session, performed by the image communication system 1, according to the embodiment. FIG. 23 is a diagram illustrating an example of a selection screen 800 for selecting a session.

When a user at the browser site A (e.g., user A1) operates the communication terminal 70A to request display of the session selection screen for selecting a communication session, the reception unit 72 receives an instruction for displaying the session selection screen. The display control unit 74 of the communication terminal 70A causes the display 706 to display the selection screen 800 as illustrated in FIG. 23 (S11). The selection screen 800 illustrated in FIG. 23 displays selection buttons 810a, 810b, and 810c, which correspond to floors A1, B1, and B2, respectively, for selection. Each of the selection buttons 810a, 810b, and 810c is associated with a corresponding session ID.

When the user A1 selects a selection button (in this example, the selection button 810a) corresponding to a particular floor (in this example, floor A1) as the desired distribution site, the reception unit 72 receives selection of a corresponding communication session (in this example, se101) (S12). Then, the data exchange unit 71 transmits a request to participate in the communication session for communication with the desired distribution site, to the communication management system 50 (S13). This participation request includes a session ID identifying the communication session for which the selection is received at S12, and the IP address of the communication terminal 70A, which is a request source terminal. The communication management system 50 receives the participation request at the data exchange unit 51.

Next, the storing and reading unit 59 of the communication management system 50 performs a process for causing the communication terminal 70A to participate in the communication session (S14). More specifically, the storing and reading unit 59 adds, in the session management DB 5001 (FIG. 17A), the IP address that is received at S13 to a field of the participant terminal IP address in a record of the session ID that is the same as the session ID received at S13. The storing and reading unit 59 further reads out, from the session management DB 5001, a site ID associated with the session ID of the communication session to which the participation process is performed. Next, the storing and reading unit 59 searches the distribution site management DB 5005 (see FIG. 19) using the site ID read at S14 as a search key, to read distribution site information associated with the site ID that is the same as the read site ID (S15). The data exchange unit 51 transmits a response to the participation request to the communication terminal 70A (S16). This response to the participation request includes the session ID that is received at S13, the distribution site information read at S15, and a result of the participation process. The participation process result includes the site ID read at S14. The communication terminal 70A receives the response to the participation request at the data exchange unit 71. The following describes a case where the operation for causing the communication terminal 70A to participate in the communication session, namely the participation process, is successfully completed.

Operation of Managing Image Type Information

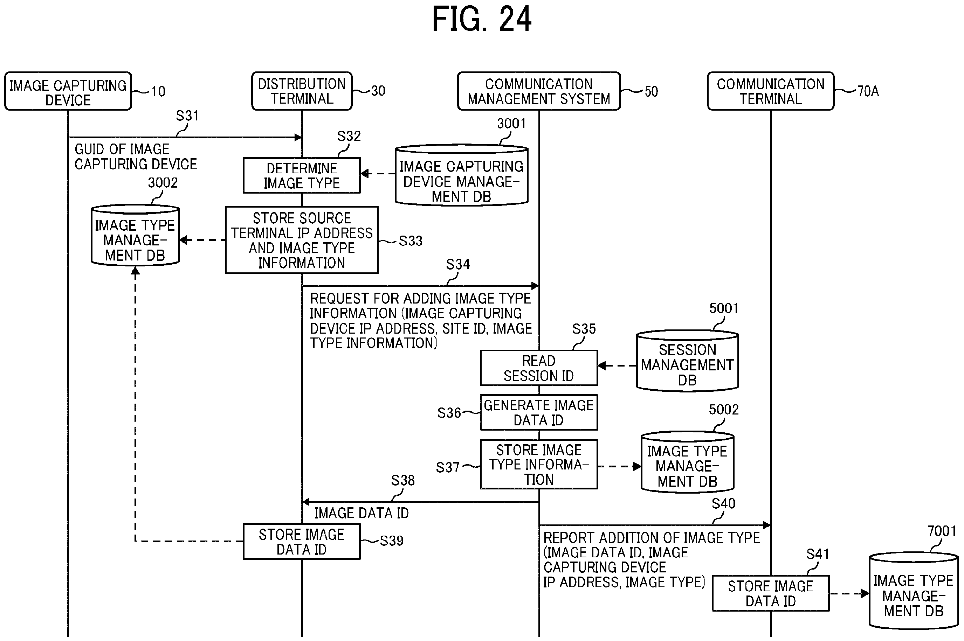

Next, referring to FIG. 24, operation of managing the image type information is described, according to the embodiment. FIG. 24 is a sequence diagram illustrating operation of managing the image type information, performed by the image communication system 1, according to the embodiment.

When a user at the distribution site connects the image capturing device 10 to the distribution terminal 30, the storing and reading unit 19 of the image capturing device 10 reads out the GUID of the own device (image capturing device 10) stored in the storage unit 1000. Then, the communication unit 11 of the image capturing device 10 transmits the GUID of the image capturing device 10 to the distribution terminal 30 (S31). Accordingly, the communication unit 37 of the distribution terminal 30 receives the GUID of the image capturing device 10.

The determination unit 35 of the distribution terminal 30 determines whether a vendor ID and a product ID, which are the same as a vendor ID and a product ID of the GUID received at S31 are stored in the image capturing device management DB 3001 (see FIG. 15A) to determine the image type (S32). More specifically, the determination unit 35 determines that the image capturing device 10 is an image capturing device that captures a special image (a spherical image, in this embodiment), when the same vender ID and product ID are stored in the image capturing device management DB 3001. By contrast, the determination unit 35 determines that the image capturing device 10 is an image capturing device that captures a general image (a planar image, in this example), when the same vender ID and product ID are not stored in the image capturing device management DB 3001.

Next, the storing and reading unit 39 stores, in the image type management DB 3002 (see FIG. 15B), the IP address of the image capturing device 10, and the image type as a determination result at S32, in association (S33). In this state, any image data ID is not yet associated. Examples of the image type information include a source name, which is determined according to the naming rule, and an image type (general image or special image).

Next, the data exchange unit 31 transmits a request for addition of the image type information to the communication management system 50 (S34). The request to add the image type information includes the IP address of the image capturing device 10, the site ID of the distribution site, and the image type information stored at S33. The communication management system 50 receives the request for addition of the image type information at the data exchange unit 51.

Next, the storing and reading unit 59 of the communication management system 50 searches the session management DB 5001 (see FIG. 17A) using the site ID received at S34 as a search key, to read out the session ID associated with the site ID (S35).

Next, the generation unit 53 generates a unique image data ID (S36). Then, the storing and reading unit 59 adds, in the image type management DB 5002 (see FIG. 17B), a new record associating the session ID that is read out at S35, the image data ID generated at S36, the IP address of the image capturing device 10 and the image type information that are received at S34, with one another (S37). The data exchange unit 51 transmits the image data ID generated at S36 to the distribution terminal 30 (S38). The distribution terminal 30 receives the image data ID at the data exchange unit 31.

Next, the storing and reading unit 39 of the distribution terminal 30 stores, in the image type management DB 3002 (see FIG. 15B), the image data ID received at S38, in association with the IP address of the image capturing device 10 and the image type information that are stored at S33 (S39).

Further, the data exchange unit 51 of the communication management system 50 transmits a notification indicating the addition of the image type information to the communication terminal 70A (S40). The notification indicating addition of the image type information includes the image data ID generated at S36, and the IP address of the image capturing device 10 and the image type information that are stored at S37. The communication terminal 70A receives the notification indicating the addition of the image type information at the data exchange unit 71.

Next, the storing and reading unit 79 of the communication terminal 70A adds, in the image type management DB 7001 (see FIG. 20A), a new record associating the image data ID, the IP address of the image capturing device 10, and the image type information, which are received at S40 (S41). Through the operation as described above, the same information is shared between the distribution terminal 30 and the communication terminal 70A, as the same information are stored in the image type management DB 3002 and the image type management DB 7001. In substantially the same manner, the notification indicating addition of the image type information is transmitted to the communication terminal 70B, which is another communication terminal, and then the communication terminal 70B stores the image type information, etc. in the image type management DB 7001.

Operation of Distributing Captured Image Data

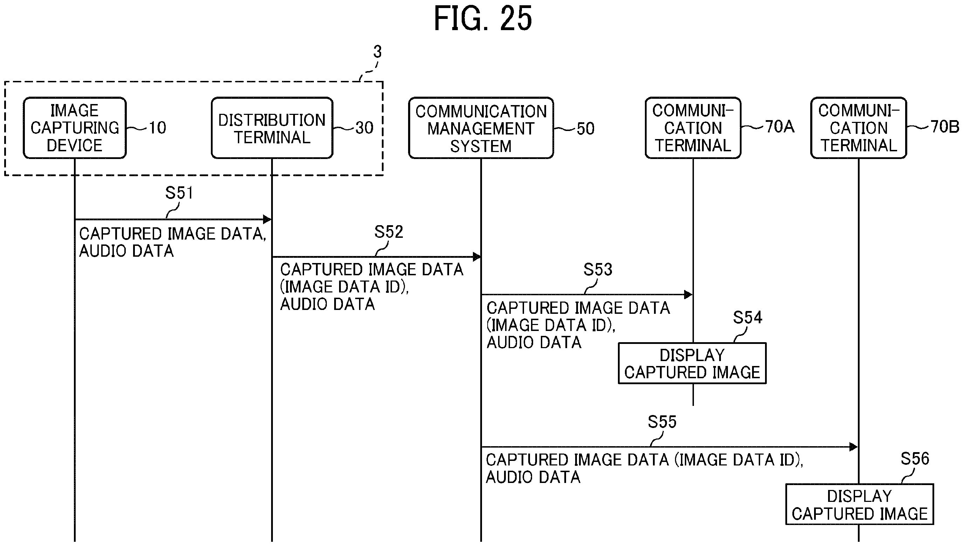

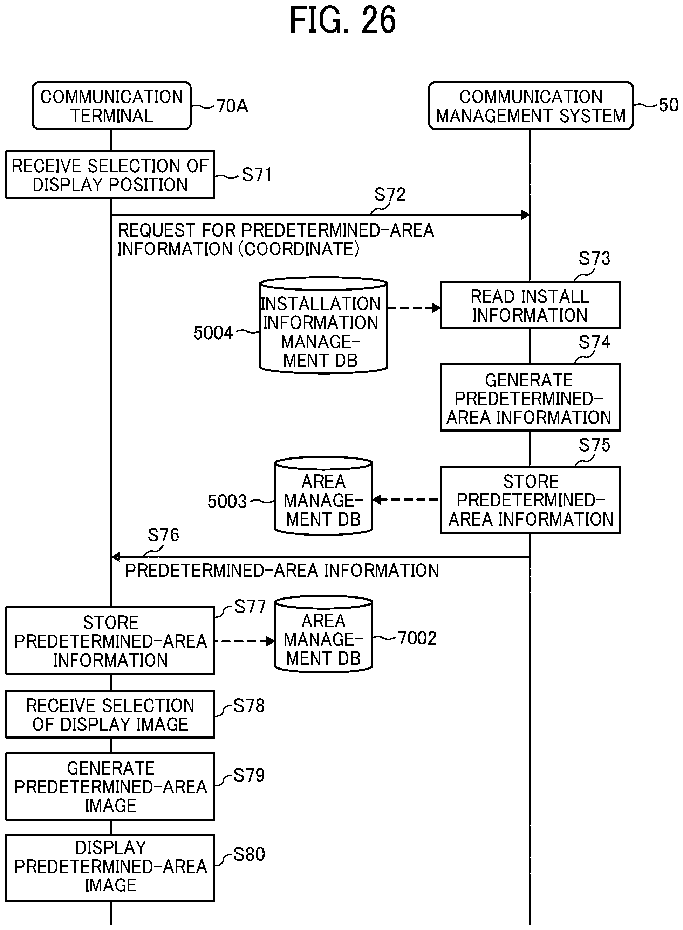

Next, referring to FIGs. 25 and 26, operation of transmitting captured image data and audio data obtained at the distribution site to each communication terminal (communication terminals 70A and 70B) via the communication management system 50 is described according to the embodiment. FIG. 25 is a sequence diagram illustrating operation of transmitting captured image data and audio data, performed by the image communication system 1, according to the embodiment. Although FIG. 25 illustrates an example case in which a captured image obtained by one image capturing device 10 is displayed on each communication terminal 70, the same processing is performed in a case in which a plurality of captured images including those acquired by other image capturing devices 10 at the distribution site are displayed at each communication terminal 70.

The communication unit 11 of the image capturing device 10 transmits, to the distribution terminal 30, captured image data obtained by capturing an object or surroundings, and audio data obtained by collecting sounds (S51). Since the image capturing device 10 is a device that is configured to obtain two hemispherical images, from which a spherical image is generated, the captured image data is configured by data of the two hemispherical images as illustrated in FIG. 3A and FIG. 3B. The distribution terminal 30 receives the captured image data and the audio data at the communication unit 37.

Next, the data exchange unit 31 of the distribution terminal 30 transmits, to the communication management system 50, the captured image data and the audio data received from the image capturing device 10 (S52). Along with the captured image data and the audio data, an image data ID identifying the captured image data, which is a transmission target, is also transmitted. The communication management system 50 receives the captured image data, the audio data, and the image data ID at the data exchange unit 51.

Next, the data exchange unit 51 of the communication management system 50 transmits the captured image data and audio data to each of the communication terminals (communication terminals 70A and 70B) participating in the same session as the distribution terminal 30 (S53 and S55). Along with the captured image data and the audio data, an image data ID identifying the captured image data, which is a transmission target, is also transmitted. As a result, the data exchange units 71 of the communication terminals 70A and 70B receive the captured image data, the audio data, and the image data ID, respectively. The display control units 74 of the communication terminal 70A and the communication terminal 70B each cause the display 706 to display the captured image based on various types of data that are received (S54 and S56).

Through FIG. 25, the communication terminal 70 at the browsing site displays the image, which is captured at the distribution site, with audio that is also collected at the distribution site. While audio is output in this example, audio may not be distributed.

Further, in case of the special image, a part of the special image is displayed, which is set by default, for example. The part of the special image to be displayed may be changed according to a user instruction, as described below referring to FIG. 26.

Referring now to FIG. 26, processing to display the predetermined-area image on the communication terminal 70 is described according to the embodiment. FIG. 26 is a sequence diagram illustrating processing to display the predetermined-area image according to the embodiment. While FIG. 26 illustrates processing to display the predetermined-area image on the communication terminal 70A, the same processing is performed for the case of displaying the predetermined-area image on another communication terminal 70 (for example, the communication terminal 70B).

First, in response to an input operation performed by the user A1 on the spherical image, which is an example of the captured image, displayed on the communication terminal 70A, the reception unit 72 of the communication terminal 70A receives selection of a predetermined area for display (S71). For example, the user at the communication terminal 70A may select a certain part of the whole image that is currently displayed, with a pointing device such as a mouse or a finger.

Next, the data exchange unit 71 transmits a request for obtaining predetermined-area information to the communication management system 50 (S72). The predetermined-area information acquisition request includes the positional coordinates of the selected area received at S71. The data exchange unit 51 of the communication management system 50 receives the predetermined-area information acquisition request from the communication terminal 70A.

Next, the storing and reading unit 59 of the communication management system 50 searches the installation information management DB 5004 (see FIG. 18) using the IP address of the image capturing device 10 received at S36 as a search key, to read the installation information associated with the IP address that is same as the received IP address (S73).

Then, the generation unit 53 generates predetermined-area information corresponding to the positional coordinates received at S72 (S74). Specifically, the generation unit 53 generates predetermined-area information, which causes generation of a predetermined-area image (the image transformed to be in perspective projection) from the spherical image, such that the received positional coordinates are located at the center of the predetermined-area image when displayed. In this example, the radius vector (r) and the polar angle ($\theta$) are previously set to have predetermined values. In other words, processing is performed with the angle of view and the elevation angle of the image in perspective projection being constant. The azimuth angle ($\varphi$) can be calculated as a relative value between the installation direction of the image capturing device 10, indicated in the installation information read at S73, and the direction of the positional coordinate from the image capturing device 10. Then, based on the calculated result, the generation unit 53 generates predetermined-area information for causing generation of a predetermined-area image (in perspective projection) from the spherical image obtained by the image capturing device 10, with the predetermined-area image having the positional coordinates at its center when it is displayed. The installation position (coordinate values) and the installation direction (in which direction the front surface of the image capturing device 10 faces) of the image capturing device 10 are set in advance in the installation information management DB5004 by the person in charge, such as a system administrator.

Next, the storing and reading unit 59 stores, in the predetermined-area management DB 5003 (see FIG. 18A), the predetermined-area information generated at S74 in association with the IP address of the image capturing device 10 (S75). The data exchange unit 51 transmits the predetermined-area information generated at S74 to the communication terminal 70A (S76). Accordingly, the data exchange unit 71 of the communication terminal 70A receives the predetermined-area information transmitted from the communication management system 50.

Next, the storing and reading unit 79 of the communication terminal 70A stores, in the predetermined-area management DB 7002 (see FIG. 20B), the predetermined-area information received at S76 in association with the IP address of the image capturing device 10 (S77).

Next, in response to an input operation by the user A1, the reception unit 72 receives a selection of a display image to be displayed on the communication terminal 70A, from among the captured image data received at S53 (S78). When the communication terminal 70A is able to simultaneously display a plurality of captured images, or when the number of received captured images is smaller than the number of captured images that can be simultaneously displayed on the communication terminal 70A, the process of S78 may be omitted.

Next, in order to display an image of the predetermined area specified by the predetermined-area information received at S76, the image and audio processing unit 73 generates a predetermined-area image by applying perspective projection transformation to the captured image using the received predetermined-area information (S79). The display control unit 74 controls the display 706 to display the predetermined-area image generated at S79 (S80). The communication terminal 70A displays the predetermined-area image that includes a position of the spherical image being displayed, which is selected by the user A1 for viewing.

In case that the image to be displayed is selected at S78, the predetermined-area image is displayed for the selected image at S80.

Display Processing of Target Area

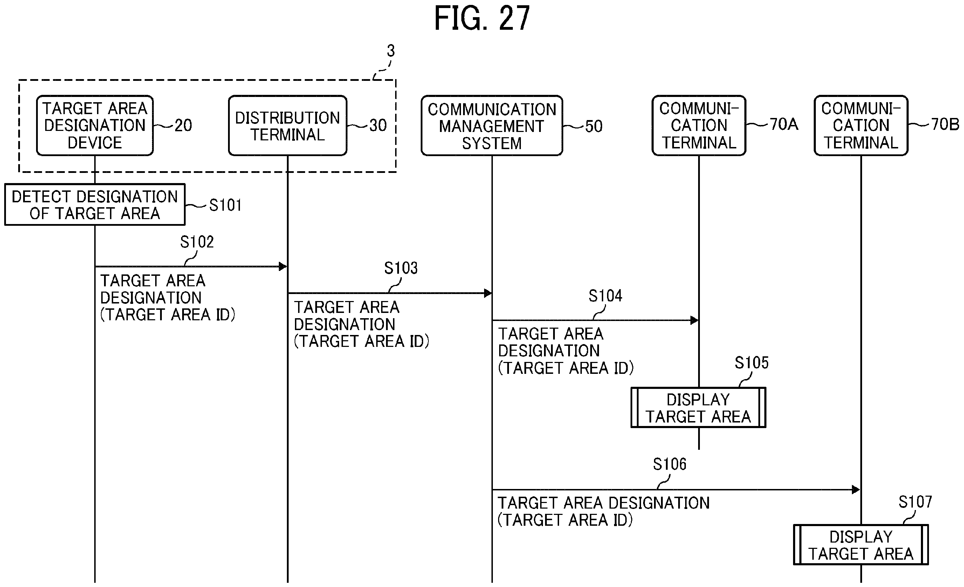

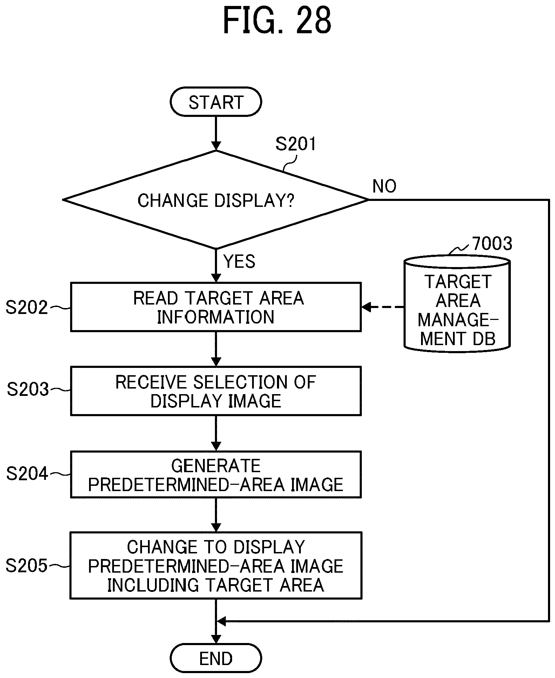

Next, referring to FIGs. 27 and 28, processing for causing the communication terminal 70 to display an image including the target area at the distribution site is described according to the embodiment. FIG. 27 is a sequence diagram illustrating operation of displaying the target area, performed by the image communication system 1, according to the embodiment. FIG. 27 illustrates processing performed in an example case in which a captured image is displayed on the communication terminal 70 (70A, 70B) through the processing described above referring to FIG. 25.

First, the detection unit 22 of the target area designation device 20 detects designation of a target area (S101). In this case, when the detection unit 22 detects occurrence of a trouble or any event to be notified at the distribution site, for example, based on the result of image recognition or various sensor outputs, the detection unit 22 determines to designate a target area where the event is detected as a target area for viewing. In alternative to such automatic detection, the detection unit 22 may detect designation of a target area in response to pressing of a dedicated button provided at the target area designation device 20, by an operator at the distribution site.

Next, the communication unit 21 transmits target area designation information to the distribution terminal 30 (S102). The target area designation information includes a target area ID for identifying the target area designation device 20. Accordingly, the communication unit 37 of the distribution terminal 30 receives the target area designation information transmitted from the target area designation device 20.

Next, the data exchange unit 31 of the distribution terminal 30 transmits, to the communication management system 50, the target area designation information transmitted from the target area designation device 20 (S103). The communication management system 50 receives the target area designation information at the data exchange unit 51.

Next, the data exchange unit 51 of the communication management system 50 transmits the target area designation information to each of the communication terminals (communication terminals 70A and 70B) participating in the same session as the distribution terminal 30 (S104 and S106). As a result, the data exchange units 71 of the communication terminals 70A and 70B each receive the target area designation information. Then, the communication terminal 70A and the communication terminal 70B execute processing to display the target area using the received target area designation information (S105 and S107).

Referring now to FIG. 28, processing to display the target area at the communication terminals 70A and 70B is described in detail, according to the embodiment. FIG. 28 is a flowchart illustrating an example processing of displaying a target area at the communication terminal. Since this processing is the same for the communication terminals 70A and 70B, the processing of FIG. 28 is described while collectively referring those communication terminals 70A and 70B as the communication terminal 70.

First, in response to reception of the target area designation information by the data exchange unit 71, the determination unit 75 determines whether or not to change display of a display screen (S201). Specifically, the determination unit 75 determines whether or not to change display of a display screen, based on whether a predetermined input operation by the user is received at the reception unit 72. For example, when a request for viewing a particular area is received, the determination unit 75 determines that a display screen is not to be changed according to the target area designation information. Otherwise, the determination unit 75 determines to change the display according to the target area designation information. With this configuration, the image communication system 1 is able to control both the communication terminal that changes display of a target area, and the communication terminal that continues to display the same target area without changing display of the target area. Therefore, in a case where the user does not want to change the display such as a case where the user is looking at another location of the distribution site, even when the target area designation information is received, the user may still continue to view the another area of the spherical image without changing the display of the communication terminal 70.

Based on a determination that the display screen is to be changed (YES at S201), the determination unit 75 proceeds the operation to S202. On the other hand, when it is determined that the display screen is no to be changed (NO at S201), the determination unit 75 ends the process without performing change of display at least according to the target area designation information.

Next, the target area specifying unit 77 searches the target area management DB 7003 (see FIG. 21) using the IP address of the image capturing device 10 that has captured the displayed captured image as a search key, to read and acquire target area information associated with the IP address same as the IP address of the image capturing device 10 via the storing and reading unit 79 (S202). In this case, the target area specifying unit 77 acquires target area information corresponding to the target area ID included in the received target area designation information, from among the stored target area information.

Next, in response to an input operation by the user A1, the reception unit 72 receives a selection of an image to be displayed (display image) on the communication terminal 70, from among the target area information obtained at S76 (S203). When the communication terminal 70 is able to simultaneously display a plurality of captured images, or when the number of received captured images is smaller than the number of captured images that can be simultaneously displayed on the communication terminal 70, the process of S203 may be omitted.

Next, the image and audio processing unit 73 generates a predetermined-area image by applying perspective projection transformation to a target area of the captured image data, as specified by the target area information corresponding to the display image selected at S203 (S204). The display control unit 74 controls the display 706 to change display, from the currently-displayed image, to the predetermined-area image generated at S204 (S205). For example, the display control unit 74 switches the display from the predetermined-area image displayed at S80 to the predetermined-area image generated at S204.

The communication terminal 70 executes the above-described processing on each of respective captured images being displayed. For example, assuming that it is determined that all captured images are to be changed at S201, the communication terminal 70 acquires the target area information for each of the currently-displayed captured images at S202, and changes each display image such that all captured images being displayed contain respective target areas, which differ among captured images being displayed.

As described above, the communication terminal 70 acquires the position of the target area designated by the target area designation device 20 based on the target area information set in advance, and displays the predetermined-area image that is generated based on the acquired target area information such that the designated target area is displayed. Specifically, the communication terminal 70 changes the display position (viewable area) of the spherical image so as to display the designated target area. Accordingly, the communication terminal 70 displays an image containing the target area, without requiring operation to the image capturing device 10.

Further, in a case of using an image capturing device that captures a general planar image, it is often needed to physically change the direction of the image capturing device to display a target area, which may be different at each time, at the communication terminal. In such case, if more than one communication terminal is provided, and an image displayed on one communication terminal is changed to include a designated target area, an image displayed on another communication terminal will be the same as the image including the designated target area. In view of this, the image communication system 1 uses the spherical image captured by the image capturing device 10, and transmits the spherical image to each communication terminal 70. Each communication terminal 70 can then cut out and display only a target area of the spherical image, as requested by the user at the communication terminal 70. That is, display images may differ between the communication terminals 70.

Variation in Processing of Displaying Target Area

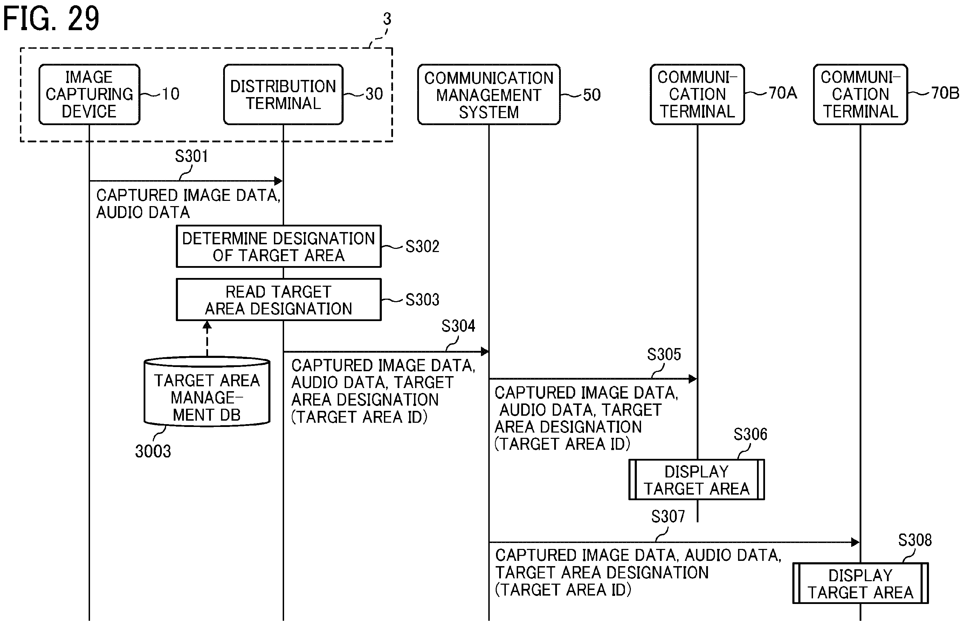

Next, referring to FIG. 29, another example processing to display a target area, performed by an image communication system, is described according to an embodiment. In this embodiment, the distribution system 3 does not include the target area designation device 20, and the determination unit 35 of the distribution terminal 30 is additionally provided with the function of the detection unit 22. FIG. 29 is a sequence diagram illustrating modified example of processing to display a target area, performed by the image communication system. FIG. 29 illustrates an example case in which the target area of the distribution site is displayed at the communication terminal 70 when the target area designation device 20 is not provided at the distribution site.

First, the communication unit 11 of the image capturing device 10 transmits the captured image data and the audio data to the distribution terminal 30 (S301). Thus, the data exchange unit 31 of the distribution terminal 30 receives the captured image data and the audio data transmitted from the image capturing device 10.

The determination unit 35 of the distribution terminal 30 determines whether or not to designate a target area (S302). Specifically, for example, in a case where a parameter such as the degree of match or the degree of similarity between a reference image that is previously set for a distribution site and an acquired captured image is out of a predetermined range, the determination unit 35 determines to designate a target area. Further, for example, the determination unit 35 determines a position of the spherical image having a value of parameter that is out of the predetermined range, as the designated target area. The following describes the example case where the determination unit 35 determines to designate a target area.

Next, when the determination unit 35 determines at S302 that a target area is designated, the storing and reading unit 39 reads the target area designation information, from the target area management DB 3003, based on the coordinate value that is determined to be the designated target area (S303). Specifically, the storing and reading unit 39 reads, as the target area designation information, the target area ID associated with the coordinate value closest to the coordinate value of the designated target area, from among the coordinate values stored in the target area management DB 3003.

Then, the data exchange unit 31 transmits the captured image data and audio data received at S301, and the target area designation information read at S303, to the communication management system 50 (S304).

Thus, the data exchange unit 51 of the communication management system 50 receives the captured image data, the audio data, and the target area designation information, transmitted from the distribution terminal 30. Processing from S305 to S308 are performed in the same or substantially the same manner as S104 to S107 described above with reference to FIG. 27, and thus redundant descriptions thereof are omitted below.

As described above, the image communication system according to the modified example is not provided with the target area designation device 20 at the distribution site. Even in such case, the distribution terminal determines whether a target area is designated and the position of the target area, if designated, based on the content of the captured image, thereby causing the communication terminal 70 to display the designated target area. That is, the distribution terminal 30 is able to designate the target area, in place of the target area designation device 20, such that the designated target area is displayed to the user at the browsing site.

In the image communication system 1 of the modified example, according to designation of a target area at the distribution terminal 30, the communication terminal 70 at the browsing site displays an image of the designated target area without requiring operation on the image capturing device 10 at the distribution site.

Further, in the image communication system 1, the communication terminal 70 cuts out a portion of the spherical image to display only the portion including the target area. Thus, for example, even when one communication terminal 70 changes to display the designated target area, another communication terminal 70 is able to continue to display a target area, which differs from the designated target area, without changing the display of the another communication terminal 70.

In the above embodiment, the predetermined area T is specified by predetermined-area information indicating an imaging direction and an angle of view of the virtual camera IC in a three-dimensional virtual space containing the spherical image CE, but the present disclosure is not limited thereto. The predetermined area T may be specified by predetermined point information indicating a center point CP or an arbitrary point of four corners of the predetermined area T having a rectangular shape in FIG. 7. In such case, it is assumed that an angle of view is constant. In the above-described embodiments, a captured image (whole image) is a three-dimensional spherical panoramic image, as an example of a spherical image. In another example, the captured image is a two-dimensional panoramic image, as an example of a spherical image.

In any one of the above-described embodiments, the communication terminal 70 at the browsing site does not need to be a dedicated terminal for browsing. In another example, the communication terminal 70 may be additionally provided with a function of distributing a captured image, such that the distribution function and the browsing function can be performed concurrently. Similarly, the distribution terminal 30 at the distribution site does not need to be a terminal dedicated to distribution. In another example, the distribution terminal 30 may be additionally provided with a function of displaying a captured image, such that the distribution function and the browsing function can be performed concurrently. As described above, the image communication system 1 may be configured to perform bidirectional communication of captured images between a plurality of sites.

As described above, according to one aspect, the communication terminal capable of displaying, on a display, a part of a whole image (such as a spherical image), as a viewable-area image (may be referred to as a predetermined-area image), is provided. The communication terminal 70 includes a storage unit (for example, the target area management DB 7003), a reception unit (for example, the data exchange unit 71), and a display control unit (for example, the display control unit 74). The display 706, which may be built-in or an external device, is also provided. The target area management DB7003 (an example of a storage unit) stores target area information indicating a plurality of target areas at a distribution site at which the whole image is captured. The reception unit receives target area designation information designating a particular target area of the plurality of target areas, from the distribution system 3 at the distribution site. The display control unit causes the display to display a viewable-area image including the particular target area based on the target area information corresponding to the particular target area indicated by the received target area designation information. With this configuration, the communication terminal is able to display an image of the distribution site corresponding to the target area designated at the distribution site, without requiring operation on the image capturing device at the distribution site.

According to one aspect, the communication terminal displays, on the display, a viewable-area image, which is an image of a part of the whole image (for example, the spherical image), before the target area designation information is received. In one example, the viewable-area image including a part of the whole image, which is specified by the user at the browsing site, is displayed. In another example, the viewable-area image including a part of the whole image, which is set by default, is displayed. In response to reception of the target area designation information, the communication terminal changes a display from the viewable-area image including the part, currently displayed, to the viewable-area image including the designated target area. Accordingly, the communication terminal changes an area of the whole image being displayed, to an area including the target area designated at the distribution site.

According to one aspect, the communication terminal 70 further includes a determination unit (for example, the determination unit 75) that determines whether to change display, in response to the received target area designation information. When the determination unit 75 determines to change the display, the communication terminal 70 changes a display from the predetermined-area image to a predetermined-area image including the designated target area. For example, the determination unit determines whether the part of the whole image, currently displayed as a viewable-area image, is specified by the user input. When the part of the whole image is specified by the user at the browsing site, the determination unit determines not to change the display. When the part of the whole image is not specified by the user, the determination unit determines to change the display. With this configuration, in response to reception of the target area designation information, the communication terminal 70 is able to selectively switch between a first case in which the display is changed to include the designated target area, and a second case in which the display is unchanged to continuously display the currently-displayed image as specified by the user.

In one aspect, an image communication system 1 includes the communication terminal (for example, the communication terminal 70) and a distribution system (for example, the distribution system 3). The distribution system 3 includes an obtaining unit (for example, the image capturing device 10), and a transmission unit (for example, the data exchange unit 31 of the distribution terminal 30). The image capturing device 10 captures the whole image (for example, the spherical image) covering the distribution site. The data exchange unit 31 transmits the whole image, acquired, to the communication terminal 70.

In one example, the distribution system 3 further includes a target area designation device 20 that designates a target area. The distribution system 3 transmits, to the communication terminal 70, target area designation information indicating a target area designated by the target area designation device 20. With this configuration, in the image communication system 1, the communication terminal 70 displays the viewable-area image including the target area designated by the target area designation device 20. This allows the user at the browsing site to view an image at the distribution site, corresponding to the designated target area. Further, in one example, the image communication system 1 may cause a plurality of communication terminals 70 to display images of different areas of the distribution site. Specifically, in such case, each communication terminal 70 is caused to display the target area, based on the target area designation information transmitted from the distribution system 3.

Further, in the image communication system 1 according to one aspect, the distribution system 3 includes a determination unit (for example, the determination unit 35) that determines whether or not to designate a target area with respect to the acquired whole image (for example, the spherical image). The distribution system 3 transmits target area designation information indicating the target area to the communication terminal 70, based on a determination that the target area is designated. With this configuration, in the image communication system 1, the distribution terminal 30 is able to designate the target area, in place of the target area designation device 20, such that the designated target area is displayed to the user at the browsing site.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), system on a chip (SOC), graphics processing unit (GPU), and conventional circuit components arranged to perform the recited functions.

Further, various tables of any one of the above-described embodiments may be generated by machine learning. Further, data of associated items can be classified, such that use of tables can be optional. In the present disclosure, machine learning is a technique that enables a computer to acquire human-like learning ability. Machine learning refers to a technology in which a computer autonomously generates an algorithm required for determination such as data identification from learning data loaded in advance, and applies the generated algorithm to new data to make a prediction. Any suitable learning method is applied for machine learning, for example, any one of supervised learning, unsupervised learning, semi-supervised learning, reinforcement learning, and deep learning, or a combination of two or more those learning.

One or more embodiments of the communication terminal (including the distribution terminal as an example), the image communication system, the image display method, and the program for controlling image display are described above. The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software.

The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. A communication terminal (70) comprising:

   a display (706) configured to display a part of a whole image as a viewable-area image, the whole image having been captured at a distribution site that is remotely located from a browsing site where the communication terminal is provided;
   a storage unit (7003) configured to store target area information indicating a plurality of target areas at the distribution site;
   a reception unit (71) configured to receive, from the distribution site, target area designation information designating a particular target area of the plurality of target areas; and
   a display control unit (74) configured to control the display to display the viewable-area image including the particular target area, based on the target area information of the particular target area.

2. The communication terminal (70) of claim 1, wherein in response to reception of the target area designation information, the display control unit (74) controls the display to switch from the viewable-area image including the part to the viewable-area image including the particular target area.

3. The communication terminal (70) of claim 2, further comprising:

   a determination unit (75) configured to determine whether the part of the whole image in the viewable-area image is specified by a user at the browsing site,
   wherein the display control unit (74) switches the display from the viewable-area image including the specified part to the viewable-area image including the particular target area, based on a determination that the part of the whole image in the viewable-area image is not specified by the user.

4. The communication terminal (70) of claim 3, wherein the display control unit (74) controls the display to continue to display the viewable-area image including the specified part, based on a determination that the part of the whole image in the viewable-area image is specified by the user.

5. The communication terminal (70) of claim 1, wherein the viewable-area image includes a plurality of viewable-area images, each viewable-area image being an image of a part of a whole image having been captured by each of a plurality of image capturing devices that are different from each other.

6. The communication terminal (70) of any one of claims 1 to 5, wherein the whole image is a spherical image.

7. An image communication system (1) comprising:

   one or more communication terminals, each communication terminal being the communication terminal of any one of claims 1 to 6; and
   a distribution system including:

   an image capturing device (10) configured to capture the whole image covering the distribution site; and
   a distribution terminal (30) configured to transmit the whole image captured at the distribution site to the communication terminal at the browsing site.

8. The image communication system of claim 7, wherein the distribution system further includes a target area designation device (20) configured to designate the particular target area,
   wherein the distribution terminal transmits the target area designation information indicating the particular target area, designated by the target area designation device, to the communication terminal.

9. The image communication system of claim 7, wherein the distribution terminal is further configured to

   determine whether or not to designate any one

43
**EP 3 962 090 A1**
44

of the plurality of target areas at the distribution site, and

based on a determination to designate the particular target area, transmit the target area designation information to the communication terminal.

10. A method for displaying, comprising:

displaying (S56, S80) a part of a whole image as a viewable-area image, the whole image having been captured at a distribution site that is remotely located from a browsing site where the communication terminal is provided;

storing, in a memory, target area information indicating a plurality of target areas at the distribution site;

receiving (S104), from the distribution site, target area designation information designating a particular target area of the plurality of target areas; and

controlling (S105) the display to display the viewable-area image including the particular target area, based on the target area information of the particular target area.

11. The method of claim 10, further comprising:

determining (S201) whether the part of the whole image in the viewable-area image is specified by a user at the browsing site; and

switching (S205) the display from the viewable-area image including the specified part to the viewable-area image including the particular target area, based on a determination that the part of the whole image in the viewable-area image is not specified by the user.

12. Carrier means carrying a computer program code for causing a computer system to perform the method of claim 10 or 11.

**23**

# FIG. 1A

103b 103a

10

# FIG. 1B

103b

115

10

# FIG. 1C

103b 103a

10

EP 3 962 090 A1

# FIG. 2

# FIG. 3A

HEMISPHERICAL IMAGE (FRONT)

# FIG. 3B

HEMISPHERICAL IMAGE (BACK)

# FIG. 3C

CAPTURED IMAGE (EQUIRECTANGULAR PROJECTION IMAGE EC)

EP 3 962 090 A1

FIG. 4B

SPHERICAL IMAGE CE

FIG. 4A

EQUIRECTANGULAR PROJECTION IMAGE EC

CS

27

# FIG. 5

VIRTUAL
CAMERA IC

PREDETERMINED-AREA IMAGE Q
(PREDETERMINED AREA T)

SPHERICAL IMAGE CE
(SPHERE CS)

(FRONT)

VIRTUAL
CAMERA IC

SPHERICAL
IMAGE CE
(SPHERE CS)

PREDETERMINED-AREA IMAGE Q
(PREDETERMINED AREA T)

(SIDE)

PREDETERMINED-AREA IMAGE Q
(PREDETERMINED AREA T)

SPHERICAL IMAGE CE
(SPHERE CS)

VIRTUAL
CAMERA IC

(TOP)

EP 3 962 090 A1

# FIG. 6A

VIRTUAL
CAMERA IC   SPHERE CS

PREDETERMINED-AREA IMAGE Q
(PREDETERMINED AREA T)

# FIG. 6B

PREDETERMINED-AREA IMAGE Q

FIRST

# FIG. 7

T

CP(x,y)

2L

α

f

α/2

ea

aa

VIRTUAL
CAMERA IC

# FIG. 8

FIG. 9

EP 3 962 090 A1

# FIG. 10

CAPTURED IMAGE 1

TARGET AREA 2

TARGET AREA 2

TARGET AREA DESIGNATION (TARGET AREA 2)

TARGET AREA 1

TARGET AREA 2

CAPTURED IMAGE 2

10a

20a

20b

10b

3

70

A, B

# FIG. 11

IMAGING UNIT 101

LENS 102a

IMAGING ELEMENT (1) 103a

LENS 102b

IMAGING ELEMENT (2) 103b

IMAGE PROCESSOR 104

IMAGING CONTROLLER 105

MICROPHONE 108

AUDIO PROCESSOR 109

110

10

CPU 111

ROM 112

SRAM 113

DRAM 114

OPERATION UNIT 115

INPUT/OUTPUT I/F 116

SHORT-RANGE COMMUNICATION CIRCUIT 117

ANTENNA 117a

ELECTRONIC COMPASS 118

GYRO SENSOR 119

ACCELERATION SENSOR 120

NETWORK I/F 121

# FIG. 12

30 (50,70,20)

| | |
|---|---|
| HD | 304 (504,704,204) |

318 (518, 718,218)   319 (519, 719,219)

301(501, 701,201)   302(502, 702,202)   303(503, 703,203)   305(505, 705,205)   306(506, 706,206)   308 (508, 708,208)

MICRO-PHONE   SPEAKER

CPU   ROM   RAM   HDD CONTROLLER   DISPLAY   EXTERNAL DEVICE CONNECTION I/F   AUDIO INPUT/ OUTPUT I/F   317 (517, 717,217)

NETWORK I/F   KEYBOARD   POINTING DEVICE   DVD-RW DRIVE   MEDIUM I/F   SHORT-RANGE COMMUNICATION CIRCUIT   310 (510, 710,210)

309 (509,709,209)   311 (511,711,211)   312 (512,712,212)   314 (514, 714,214)   316 (516, 716,216)   320 (520, 720,220)

MEDIUM

313 (513,713,213)   315 (515,715,215)

EP 3 962 090 A1

# FIG. 13

3

**TARGET AREA DESIGNATION DEVICE** ~20

COMMUNI-CATION UNIT ~21

DETECTION UNIT ~22

**IMAGE CAPTURING DEVICE** ~10

| AUDIO COLLEC-TION UNIT ~14 | COMMUNI-CATION UNIT ~11 |
|---|---|
| DETERMINATION UNIT ~15 | RECEPTION UNIT ~12 |
| STORING AND READING UNIT ~19 | IMAGE CAPTURING UNIT (OBTAINER) ~13 |

STORAGE UNIT ~1000

**DISTRIBUTION TERMINAL** ~30

STORAGE UNIT ~3000

| IMAGE CAPTURING DEVICE MANAGE-MENT DB ~3001 | IMAGE TYPE MANAGE-MENT DB ~3002 | TARGET AREA MANAGE-MENT DB ~3003 |
|---|---|---|

| STORING AND READING UNIT ~39 | DISPLAY CONTROL UNIT ~34 |
|---|---|
| COMMUNICA-TION UNIT ~37 | IMAGE AND AUDIO PROCESSING UNIT ~33 |
| GENERATION UNIT ~36 | RECEPTION UNIT ~32 |
| DETERMINA-TION UNIT ~35 | DATA EXCHANGE UNIT ~31 |

COMMUNICATION NETWORK ~100

EP 3 962 090 A1

# FIG. 14

# FIG. 15A

| VENDER ID AND PRODUCT ID OF GUID FOR IMAGE CAPTURING DEVICE |
|---|
| vid_05ca&pid_2711 |
| vid_05ca&pid_3822 |
| . . . |

# FIG. 15B

| IMAGE DATA ID | IP ADDRESS OF IMAGE CAPTURING DEVICE | SOURCE NAME (IMAGE TYPE) |
|---|---|---|
| RS001 | 2.1.2.3 | Video_Theta |
| RS002 | 2.1.1.5 | Video_Theta |
| RS003 | 2.1.5.4 | Video |
| RS004 | 2.1.5.6 | Video |
| . . . | . . . | . . . |

# FIG. 16

| ID | COORDINATE |
|---|---|
| G001 | (25, 25) |
| G002 | (27, 43) |
| G003 | . . . |
| . . . | . . . |

# FIG. 17A

| SESSION ID | SITE ID | IP ADDRESSES OF PARTICIPATING COMMUNICATION TERMINALS |
|---|---|---|
| se101 | A0001 | 1.2.1.3、1.2.2.3、1.2.1.5 |
| se102 | B0001 | 1.2.1.3、1.2.2.4、1.2.3.4 |
| ... | ... | ... |

# FIG. 17B

| SESSION ID | IMAGE DATA ID | IP ADDRESSES OF IMAGE CAPTURING DEVICES | SOURCE NAME (IMAGE TYPE) |
|---|---|---|---|
| se101 | RS001 | 2.1.2.3 | Video_Theta |
| se101 | RS002 | 2.1.1.5 | Video_Theta |
| se101 | RS003 | 2.1.5.4 | Video |
| se101 | RS004 | 2.1.5.6 | Video |
| se102 | RS005 | 2.3.2.5 | Video_Theta |
| ... | ... | ... | ... |

EP 3 962 090 A1

## FIG. 18A

| IP ADDRESS OF DISTRIBUTION TERMINAL (SOURCE) | IP ADDRESS OF COMMUNICATION TERMINAL (DESTINATION) | PREDETERMINED-AREA INFORMATION | | |
|---|---|---|---|---|
| | | $r$ | $\theta$ | $\phi$ |
| 1.3.2.3 | 1.2.1.3 | 10 | 20 | 30 |
| 1.3.2.3 | 1.2.1.3 | 20 | 30 | 40 |
| 1.3.2.3 | 1.2.1.3 | 30 | 40 | 50 |
| 1.3.2.3 | 1.2.1.3 | ... | ... | ... |
| 1.3.3.2 | 1.2.2.4 | ... | ... | ... |
| ... | ... | ... | ... | ... |

## FIG. 18B

| SITE ID | IP ADDRESS OF IMAGE CAPTURING DEVICE | COORDINATE | INSTALL DIRECTION OF IMAGE CAPTURING DEVICE |
|---|---|---|---|
| A0001 | 2.1.2.3 | (10, 10) | 0° |
| A0001 | 2.1.1.5 | (20, 10) | 90° |
| A0001 | 2.1.2.1 | (10, 20) | 180° |
| A0001 | 2.1.2.6 | (20, 20) | 270° |
| B0001 | 2.3.2.5 | (30, 10) | 0° |
| ... | ... | ... | ... |

# FIG. 19

| SITE ID | SITE NAME | MAP IMAGE DATA, SITE COORDINATE |
|---------|-----------|--------------------------------|
| A0001 | FLOOR A1 | aaa.siteA.com |
| B0001 | FLOOR B1 | bbb.siteB.com |
| . . . | . . . | . . . |

# FIG. 20A

| IMAGE DATA ID | IP ADDRESS OF IMAGE CAPTURING DEVICE | SOURCE NAME (IMAGE TYPE) |
|---|---|---|
| RS001 | 2.1.2.3 | Video_Theta |
| RS002 | 2.1.1.5 | Video_Theta |
| RS008 | 2.1.2.1 | Video_Theta |
| RS009 | 2.1.2.6 | Video_Theta |
| ... | ... | ... |

EP 3 962 090 A1

# FIG. 20B

| IP ADDRESS OF DISTRIBUTION TERMINAL (SOURCE) | IP ADDRESS OF IMAGE CAPTURING DEVICE | PREDETERMINED-AREA INFORMATION | | |
|---|---|---|---|---|
| | | $r$ | $\theta$ | $\phi$ |
| 1.3.2.3 | 2.1.2.3 | 10 | 20 | 30 |
| 1.3.2.3 | 2.1.1.5 | 20 | 30 | 40 |
| 1.3.2.3 | 2.1.2.1 | 30 | 40 | 50 |
| 1.3.2.3 | 2.1.2.6 | ... | ... | ... |
| 1.3.1.4 | 2.3.2.5 | ... | ... | ... |
| ... | ... | ... | ... | ... |

# FIG. 21

| IP ADDRESS OF DISTRIBUTION TERMINAL (SOURCE) | IP ADDRESS OF IMAGE CAPTURING DEVICE | TARGET AREA 1 (ID;A001) | | | TARGET AREA 2 (ID;A002) | | |
|---|---|---|---|---|---|---|---|
| | | $r$ | $\theta$ | $\phi$ | $r$ | $\theta$ | $\phi$ |
| 1.3.2.3 | 2.1.2.3 | 15 | 25 | 35 | 35 | 45 | 55 |
| 1.3.2.3 | 2.1.1.5 | 25 | 35 | 45 | 45 | 55 | 65 |
| 1.3.2.3 | 2.1.2.1 | ... | ... | ... | ... | ... | ... |
| 1.3.2.3 | 2.1.2.6 | ... | ... | ... | ... | ... | ... |
| ... | ... | ... | ... | ... | ... | ... | ... |

EP 3 962 090 A1

# FIG. 22

COMMUNICATION TERMINAL ~70A

COMMUNICATION MANAGEMENT SYSTEM ~50

DISPLAY SELECTION SCREEN FOR SESSION ~S11

RECEIVE SELECTION OF SESSION ~S12

S13

PARTICIPATION REQUEST (SESSION ID, REQUEST SOURCE TERMINAL IP ADDRESS)

S14

JOIN COMMUNICATION SESSION

5001

SESSION MANAGEMENT DB

S15

READ DISTRIBUTION SITE INFORMATION

5005

DISTRIBUTION SITE MANAGE- MENT DB

S16

PARTICIPATION REQUEST RESPONSE (SESSION ID, DISTRIBUTION SITE INFORMA- TION, PARTICIPATION RESULT)

EP 3 962 090 A1

# FIG. 23

800

FLOOR A1（se101） ——810a

FLOOR B1（se102） ——810b

FLOOR B2（se103） ——810c

# FIG. 24

EP 3 962 090 A1

# FIG. 25

EP 3 962 090 A1

# FIG. 26

```
COMMUNICATION          70A          COMMUNICATION              50
TERMINAL                             MANAGEMENT SYSTEM
```

RECEIVE SELECTION OF DISPLAY POSITION —S71

S72

REQUEST FOR PREDETERMINED-AREA INFORMATION (COORDINATE)

S73

READ INSTALL INFORMATION

5004 — INSTALLATION INFORMATION MANAGE-MENT DB

S74

GENERATE PREDETERMINED-AREA INFORMATION

S75

5003 — AREA MANAGE-MENT DB

STORE PREDETERMINED-AREA INFORMATION

S76

PREDETERMINED-AREA INFORMATION

S77

STORE PREDETERMINED-AREA INFORMATION

AREA MANAGE-MENT DB — 7002

RECEIVE SELECTION OF DISPLAY IMAGE —S78

GENERATE PREDETERMINED-AREA IMAGE —S79

DISPLAY PREDETERMINED-AREA IMAGE —S80

# FIG. 27

# FIG. 28

```
         ┌─────────┐
         │  START  │
         └────┬────┘
              │
              ▼                    S201
        ╱─────────────╲
       ╱               ╲         NO
      ╱  CHANGE DISPLAY? ╲─────────────────────┐
      ╲                  ╱                      │
       ╲               ╱                        │
        ╲─────────────╱                         │
              │                                 │
             YES                    ╭───────╮   │
              ▼                    │  7003  │   │
        ┌──────────────┐          ┌┴───────┴┐  │
 S202   │ READ TARGET  │◄ ─ ─ ─ ─ │ TARGET  │  │
        │ AREA         │          │ AREA    │  │
        │ INFORMATION  │          │ MANAGE- │  │
        └──────┬───────┘          │ MENT DB │  │
               │                  └─────────┘  │
               ▼                               │
        ┌──────────────┐                       │
 S203   │ RECEIVE      │                       │
        │ SELECTION OF │                       │
        │ DISPLAY IMAGE│                       │
        └──────┬───────┘                       │
               │                               │
               ▼                               │
        ┌──────────────┐                       │
 S204   │ GENERATE     │                       │
        │ PREDETERMINED│                       │
        │ -AREA IMAGE  │                       │
        └──────┬───────┘                       │
               │                               │
               ▼                               │
        ┌──────────────────┐                   │
        │ CHANGE TO DISPLAY│                   │
 S205   │ PREDETERMINED-   │                   │
        │ AREA IMAGE       │                   │
        │ INCLUDING        │                   │
        │ TARGET AREA      │                   │
        └────────┬─────────┘                   │
                 │◄──────────────────────────── ┘
                 ▼
           ┌─────────┐
           │   END   │
           └─────────┘
```

FIG. 29

IMAGE CAPTURING DEVICE 10

DISTRIBUTION TERMINAL 30

3

COMMUNICATION MANAGEMENT SYSTEM 50

COMMUNI-CATION TERMINAL 70A

COMMUNI-CATION TERMINAL 70B

S301 CAPTURED IMAGE DATA, AUDIO DATA

S302 DETERMINE DESIGNATION OF TARGET AREA

S303 READ TARGET AREA DESIGNATION

TARGET AREA MANAGE-MENT DB 3003

S304 CAPTURED IMAGE DATA, AUDIO DATA, TARGET AREA DESIGNATION (TARGET AREA ID)

S305 CAPTURED IMAGE DATA, AUDIO DATA, TARGET AREA DESIGNATION (TARGET AREA ID)

S306 DISPLAY TARGET AREA

S307 CAPTURED IMAGE DATA, AUDIO DATA, TARGET AREA DESIGNATION (TARGET AREA ID)

S308 DISPLAY TARGET AREA

Europäisches
Patentamt

European
Patent Office

Office européen
des brevets

# EUROPEAN SEARCH REPORT

**Application Number**

EP 21 19 2500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/306004 A1 (HAKATA MAYU [JP] ET AL) 3 October 2019 (2019-10-03) * paragraph [0132] - paragraph [0223]; figures 11,14A,15,18,21,23,27-31 * ----- | 1-12 | INV. H04N21/218 H04N21/4728 H04N21/6587 H04N21/81 |
| X | EP 3 461 124 A1 (RICOH CO LTD [JP]) 27 March 2019 (2019-03-27) * paragraph [0138] - paragraph [0145]; figures 15,18,21,27-29 * ----- | 1,7,10, 12 | |

**TECHNICAL FIELDS SEARCHED (IPC)**

H04N

The present search report has been drawn up for all claims

| Place of search | Date of completion of the search | Examiner |
|---|---|---|
| The Hague | 22 September 2021 | Santos Conde, José |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 2500

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2021

| Patent document cited in search report | | Publication date | Patent family member(s) | | Publication date |
|---|---|---|---|---|---|
| US 2019306004 | A1 | 03-10-2019 | JP 2019176436 A<br>US 2019306004 A1<br>US 2020244510 A1 | | 10-10-2019<br>03-10-2019<br>30-07-2020 |
| EP 3461124 | A1 | 27-03-2019 | EP 3461124 A1<br>US 2019098211 A1<br>US 2020045230 A1 | | 27-03-2019<br>28-03-2019<br>06-02-2020 |

EPO FORM P0459

For more details about this annex : see Official Journal of the European Patent Office, No. 12/82

**EP 3 962 090 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017022587 A